# EUROPÄISCHE PATENTSCHRIFT

(11) **EP 0 693 254 B1**
(45) Veröffentlichungstag und Bekanntmachung des Hinweises auf die Patenterteilung: **24.10.2001**
(21) Anmeldenummer: 95110378.7
(22) Anmeldetag: 04.07.1995
(51) Int. Cl.: A01N 53/06, A01N 25/18

(54) **Insektizid-enthaltende Gelformulierungen für Verdampfersysteme**
Gel formulations containing insecticides for vaporizer systems
Formulations de gel contenant de l'insecticide pour des systèmes de vaporisation

(30) Priorität: 14.07.1994 DE 4424786
(43) Veröffentlichungstag der Anmeldung: 24.01.1996
(73) Patentinhaber: BAYER AG, 51368 Leverkusen (DE)
(72) Erfinder: Neumann, Hermann, Dr., D-42781 Haan (DE); Kalder, Dietmar, D-51379 Leverkusen (DE)

(56) Entgegenhaltungen:
- EP-A- 0 579 245
- DE-A- 1 800 482
- DE-A- 2 738 878
- GB-A- 2 002 635
- GB-A- 2 022 417
- US-A- 3 337 399
- DATABASE WPI Week 8404 Derwent Publications Ltd., London, GB; AN 83-08679K [04] & JP-A-57 203 002 (LION) , 13.Dezember 1982
- DATABASE WPI Week 9039 Derwent Publications Ltd., London, GB; AN 90-294260 [39] & JP-A-02 207 002 (FUMAKILLA) , 16.August 1990
- DATABASE WPI Week 8747 Derwent Publications Ltd., London, GB; AN 87-330752 [47] & JP-A-62 235 562 (FUMAKILLA) , 15.Oktober 1987

## Beschreibung

Die vorliegende Erfindung betrifft neue Gelformulierungen zur geregelten und langanhaltenden Freisetzung eines insektiziden Wirkstoffes mittels einer Wärmequelle. Diese neuen Gelformulierungen sind dadurch gekennzeichnet, daß sie das Insektizid und verdampfungskontrollierenden Stoff (Verdampfungsmodifikator) in Kombination mit einem als Gelbildner geeigneten Feststoff enthalten.

Die Aufgabe der vorliegenden Erfindung besteht darin, ein insektizides Wirkstoff derart zu formulieren, daß diese nicht nur stabil gelagert werden können, sondern darüber hinaus in Verbindung mit organischen und anorganischen Hilfsstoffen, Stabilisatoren, Antioxidantien, Duft- und Farbstoffen gleichmäßig und über einen längeren Zeitraum hinweg, unzersetzt, mittels einer Wärmequelle verdampft werden können. Dadurch soll bei möglichst geringem Energieaufwand ein Optimum an Wirkung und an Wirkungsdauer erzielt werden. Der Einsatz dieser neuen Wirkstofformulierung soll in tiefgezogenen oder gegossenen Behältern aus Kunststoff oder Metall erfolgen, die offen oder mit geeignetem Gewebe, Folien aus Kunststoff, z.B. Polypropylenfolie oder Metall verschlossen sind, die für die flüchtigen Komponenten durchlässig sind. Diese Tiefzieh-Behälter können in einem elektrischen Heizgerät zum Abtöten von Insekten, z.B. Mücken, eingesetzt werden. Beispiele für derartige Tiefzieh-Behälter werden in US 4, 634, 614, WO 81/0241, US 4, 145, 001 und EP-OS 0 300, 286 beschrieben.

Im Falle des Tötens von Stechmücken mit einem elektrischen Heizgerät, sogenannten Plättchenverdampfer, ist allgemein bekannt, daß besonders ausgewählte Stoffe, wie Zellstoff- und Baumwollkarton, Asbest, Keramik und/oder poröse Kunstharze mit Pyrethroid-Insektiziden imprägniert werden, um Insektizidplatten zu erhalten, wobei die Insektizide durch die Wirkung des Heizgerätes zur Mückenvertilgung, das eine Wärme von 120-190°C erzeugt, verflüchtigt werden.

Ein erheblicher Nachteil dieser Plättchenverdampfer liegt im ungünstigen Verhältnis zwischen Energieaufwand und zu verdampfendem Wirkstoff, da die Wirkstoffanteile im Verhältnis zu den Hilfsstoffen als gering anzusehen sind. Ferner bedingt die hohe Arbeitstemperatur dieser Plättchenverdampfer, daß nur wenige Wirkstoffe überhaupt dafür geeignet sind und diese darüber hinaus systembedingt über die vorgegebene Wirkdauer ungleichmäßig abgegeben werden. Die Wirkdauer dieser Verdampferplättchen ist dabei auf maximal 12 Stunden begrenzt. Das ungünstige Verhältnis von Wirkstoff/Wirkstoffträger erfordert schließlich ständig einen größeren Vorrat an Verdampferplättchen, was zu erheblichem Materialverbrauch an Trägerstoffen und Verpackungsmaterial führt.

Auch die bereits vielfach für den Hausgebrauch verwendeten Geräte für die Verdampfung einer insektiziden Wirkstofflösung mittels eines beheizten Dochtes (GB2153227), worin der Wirkstoff in einem Kerosin-Gemisch gesättigter, aliphatischer Kohlenwasserstoffe gelöst wird, das mittels des Dochtes elektrisch verdampft wird, weisen erhebliche Nachteile auf.

Neben der Tatsache, daß auch diese Verdampfersysteme bei Betriebstemperaturen zwischen 120 und 190°C arbeiten, benötigen sie ein eigenes Verteilungssystem (Docht) und erhebliche Mengen an Lösungsmitteln. Die im Verhältnis zum Wirkstoff überproportionale Menge an Lösemitteln führt bei der Produktanwendung zu einer hohen Konzentration von Lösemitteln bzw. Hilfsstoffen im Raum, was wiederum zu einer - häufig von Verbrauchern beobachteten und reklamierten - Verschmutzung von Wänden und Gegenständen, die sich in der Nähe dieser Geräte befinden, führt.

Weitere Nachteile dieser Formulierungen sind das große Volumen der Lösemittelbehälter und die Gefahr des Auslaufens des Lösemittels, was erhebliche Probleme beim Transport und Gefahren bei der Anwendung beinhaltet.

Die vorliegende Erfindung betrifft daher eine Gelformulierung von Insektiziden, die all die oben beschriebenen Nachteile vermeidet, darüber hinaus einfach anzuwenden ist, d.h. z.B. in bereits bekannten Verdampfergeräten des Typs, wie er in der EP 0 321 729 beschrieben wird, und bei niedriger Arbeitstemperatur von 70 - 120°C gleichzeitig eine kontinuierliche Abgaberate des Wirkstoffes bis zu 100 Tagen, vorzugsweise bis zu 60 Tagen, hin gewährleistet.

Gegenstand der Erfindung sind Gelformulierungen für Verdampfersysteme zur geregelten und lang anhaltenden Freisetzung eines insektiziden Wirkstoffs, dadurch gekennzeichnet, daß die Formulierungen 2,3,5,6-Tetrafluorbenzyl-(+)-1R-trans-2,2-dimethyl-3-(2,2-dichlorvinyl)-cyclopropan-carboxylat (Transfluthrin) und als verdampfungskontrollierenden Stoff (Verdampfungsmodifikator) (i) ein Gemisch teilhydrierter Terphenyle oder (ii) ortho-, meta- und/oder para-Terphenyl in Kombination mit einem als Gelbildner geeigneten anorganischen Feststoff enthalten.

Die GB 2 002 635 beschreibt eine Aktivitätssteigerung schnell flüchtiger Pyrethroide durch Zusatz von Phthalsäureestern, aliphatischen Estern, aliphatischen zweibasischen Estern, aromatischen Carbonsäureestern, höheren aliphatischen Alkoholen, Glykolethern und Kohlenwasserstoffen mit mehr als 10 C-Atomen. Transfluthrin wird nicht erwähnt.

Die GB 2 022 417 betrifft Fungizide oder Insektizide enthaltende Räuchermittel-Zubereitungen, die ein Verdampfen des Fungizids/Insektizids unterhalb dessen Zersetzungstemperatur gewährleisten sollen. Diese Wirkung wird durch Zusatz von aliphatischen Kohlenwasserstoffen, halogenierten Kohlenwasserstoffen mit mindestens 2 C-Atomen und Alkoholen und Estern mit mindestens 3 C-Atomen erreicht. Als mögliche Träger für die Räuchermittel-Zubereitungen kommen Aktivkohle, Tone, Zeolithe oder Gips in Frage. Transfluthrin wird auch hier nicht erwähnt.

Aus DATABASE WPI Week 8404, Derwent AN 83-08679 K [04] sind gelförmige Formulierungen enthaltend verdampfbare Insektizide (die z. B. vom Pyrethroid-Typ sein können) bekannt. Es können wirkungsverbessernde Mittel und Antioxidantien zugesetzt werden. Welcher Art die wirkungsverbessernden Mittel sein können, ist nicht ersichtlich.

Die erfindungsgemäßen Gelformulierungen werden hergestellt, indem in einer entsprechenden Mischapparatur (Planetenrührer) zunächst der Wirkstoff mit Verdampfungsmodifikator und Stabilisator sowie gegebenenfalls zusätzliche Lösungsmittel bei Raumtemperatur bis zur klaren Lösung verrührt werden. Anschließend wird unter Vakuum der Gelbildner zugesetzt und intensiv bis zur homogenen Gelbildung gerührt. Vor der endgültigen Gelabmischung mit Gelbildner können zu der vorliegenden klaren Lösung gegebenenfalls Parfümöle und Farbstoffe unter Rühren bis zur vollständigen Homogenität zugesetzt werden.

Die verwendeten Verdampfungsmodifikatoren sind Diphyl THT® oder Therm S900® oder o-, m-, p-Terphenyl.

Insbesondere bevorzugt wird Diphyl THT® als Verdampfungsmodifikator eingesetzt.

Als Gelbildner werden hochdisperse Kieselsäuren eingesetzt, wie z.B. Aerosilox 50®, Aerosil 50®, Aerosil 130®, Aerosil 150®, Aerosil 200®, Aerosil 300®, Aerosil 380®, Aerosil Mox80®, Na-stearat.

Bevorzugt werden als Gelbildner Aerosil 200®:
Aerosilox 50®, Aerosil 50®, Aerosil 130®, Aerosil 150®, Aerosil 300®, Aerosil 380® oder Aerosil Mox80® eingesetzt.

Insbesondere bevorzugt wird Aerosil 200 ® als Gelbildner verwendet.

Die erfindungsgemäßen Insektizid-enthaltenden Gelformulierungen können mit Hilfe von Antioxidantien stabilisiert werden, indem man einen UV-Absorber als Additiv der Formulierung beimischt. Als UV-Absorber können alle bekannten UV-Absorber eingesetzt werden.

Bevorzugt eingesetzt werden Phenolderivate, wie z.B. Butylhydroxytoluol (BHT), Butylhydroxyanisol (BHA), Bisphenol-Derivate, Arylamine, wie z.B. Phenyl-α-naphthylamin, Phenyl-β-naphthylamin, ein Kondensat aus Phenetidin und Aceton o.ä. oder Benzophenone.

Als organische und anorganische Hilfsstoffe kommen in Frage:

Ammoniumsalze und natürliche Gesteinsmehle wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silicate; als feste Trägerstoffe für Granulate kommen in Frage:

z.B. gebrochene und fraktionierte, natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen in Frage:

z.B. nicht ionogene und anionische Emulgatoren, wie Polyoxyethylen-Fettsäure-Ester, Polyoxyethylen-Fettalkohol-Ether, z.B. Alkylaryl-polyglycol-Ether, Alkylsulfonate, Alkylsulfate, Arylsulfonate sowie Eiweißhydrolisate; als Dispergiermittel kommen in Frage:

z.B. Lignin-Sulfitablaugen und Methylcellulose.

Es können in den erfindungsgemäßen Insektzid-enthaltenden Gelformulierungen Haftmittel wie Carboxymethylcellulose, natürliche und synthetische, pulvrige, körnige oder latexförmige Polymere verwendet werden, wie Gummiarabicum, Polyvinylalkohol, Polyvinylacetat sowie natürliche Phopholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizaryn, Azo- und Metallphthalocyanin-Farbstoffe und Spurennährstoffe, wie Salze von Eisen, Mangan, Bohr, Kupfer, Cobalt, Molybdän und Zink verwendet werden.

Diese Farbstoffzusätze zu den erfindungsgemäßen Gelformulierungen ermöglichen einerseits, daß man das Gel im Folienbehälter deutlich erkennt, andererseits können sie aber auch zur optischen Endpunkterkennung der biologischen Wirksamkeit des Systems herangezogen werden.

Dazu wird der Folienbehälter mit dem angefärbten Gel in ein Heizgerät eingesteckt, dessen Front transparent oder das mit einem Sichtspalt versehen ist.

Während des Gebrauchs des Heizgerätes trocknet der Inhalt des Folienbehälters, der durch eine farbliche Markierung am Behälter selbst oder am Heizgerät nicht sichtbar ist.

Durch die transparente Front des Heizgerätes oder durch den Sichtspalt ist nur noch der leere Folienbehälter zu erkennen.

Eine weitere Variante der optischen Endpunkterkennung durch zugesetzte Farbstoffe kann auch durch Farbumschlag zu einer anderen Farbe hin erfolgen, wenn die Wirkstoffe und gegegebenenfalls das Lösungsmittel abgedampft sind.

Den erfindungsgemäßen Formulierungen können desodorierende Mittel beigefügt werden, wie z.B. Laurylmethacrylat, Geranylcrotonat, Acetophenon-myristat, p-Methylacetophenon-benzaldehyd, Benzylacetat, Benzylpropionat, Amylzimtaldehyd, Anisaldehyd, Diphenyloxid, Methylbenzoat, Ethylbenzoat, Methylphenylacetat, Ethylphenylacetat, Neolin, Safrol, usw.

Weiterhin können natürliche Duftstoffe den erfindungsgemäßen Formulierungen beigefügt werden, wie z.B. Moschus, Zibet, Ambra, Castoreum und ähnliche Duftstoffe: Ajowaöl, Mandelöl, Ambrettesamen absol., Angelikawurzelöl, Anisöl, Basilikumöl, Lorbeeröl, Benzoinresinoid, Bergamottessenz, Birkenöl, Rosenholzöl, Pfriemenkraut absol., Cajeputöl, Canangaöl, Capiscumöl, Kümmelöl, Cardamonöl, Möhrensamenöl, Cassiaöl, Zedernholzöl, Selleriesamenöl, Zimtrindenöl, Zitronellöl, Muskattellersalbeiöl, Nelkenöl, Kognaköl, Korianderöl, Cubebenöl, Kampferöl, Dillöl, Estragonöl, Eukalyptusöl, Fenchelöl süß, Galbanumresinoid, Knoblauchöl, Geraniumöl, Ingweröl, Grapefruitöl, Hopfenöl, Hyacinthe absol., Jasmin absol., Wacholderbeerenöl, Labdanumresinoid, Lavandelöl, Lorbeerblätteröl, Zitronenöl, Lemonengrasöl, Liebstöckelöl, Macisöl, Mandarinenöl, Mimosa absol., Myrrhe absol., Senföl, Narcisse absol., Neroliöl, Muskatnußöl, Eichenmoos absol., Olibanumresinoid, Zwiebelöl, Opoponaxresinoid, Orangenöl, Orangenblütenöl, Iris konkret, Pfefferöl, Pfefferminzöl, Perubalsam, Petitgrainöl, Fichtennadelöl, Rose absol., Rosenöl, Rosmarinöl, Sandelholzöl, Salbeiöl, Krauseminzöl, Styraxöl, Thymianöl, Tolubalsam, Tonkabohnen absol., Tuberose absol., Terpentinöl, Vanilleschoten absol., Vetiveröl, Veilchenblätter absol., Ylang-Ylang-Öl und ähnliche Pflanzenöle usw.

Als synthetische Duftstoffe können den erfindungsgemäßen Gelformulierungen zugefügt werden:

Pinen, Limonen und ähnliche Kohlenwasserstoffe; 3,3,5-Trimethylcyclohexanol, Linalool, Geraniol, Nerol, Citronellol, Menthol, Borneol, Borneylmethoxycyclohexanol, Benzylalkohol, Anisalkohol, Zimtalkohol, β-Phenylethylalkohol, cis-3-Hexanol; Terpineol und ähnliche Alkohole; Anethole, Moschusxylol, Isoeugenol, Methyleugenol und ähnliche Phenole; α-Amylzimtaldehyd, Anisaldehyd, n-Butyraldehyd, Cuminaldehyd, Cyclamenaldehyd, Decylaldehyd, Isobutyraldehyd, Hexylaldehyd, Heptylaldehyd, n-Nonylaldehydnonadienol, Citral, Citronellal, Hydroxycitronellal, Benzaldehyd, Methylnonylacetaldehyd, Zimtaldehyd, Dodecanol, α-Hexylzimtaldehyd, Undekanal, Heliotropin, Vanillin, Ethylvanillin, und ähnliche Aldehyde, Methylamylketon, Methyl-β-naphtylketon, Methylnonylketon, Moschusketon, Diacetyl, Acetylpropionyl, Acetylbutyryl, Carvon, Methon, Campher, Acetophenon, p-Methylacetophenon, Jonon, Methyljonon und ähnliche Ketone; Amylbutyrolacton, Diphenyloxid, Methylphenylglycidat, Nonylaceton, Cumarin, Cineol, Ethylmethylphenylglycidat und ähnliche Lactone bzw. Oxide, Methylformiat, Isopropylformiat, Linalylformiat, Ethylacetat, Octylacetat, Methylacetat, Benzylacetat, Cinnamylacetat, Butylpropionat, Isoamylacetat, Isopropylisobutyrat, Geranylisovalerat, Allylcapronat, Butylheptylat, Octylcaprylat, Methylheptincarboxylat, Methyloctincarboxylat, Isoamylcaprylat, Methyllaurat, Ethylmyristat, Methylmyristat, Ethylbenzoat, Benzylbenzoat, Methylcarbinylphenylacetat, Isobutylphenylacetat, Methylcinnamat, Styracin, Methylsalicylat, Ethylanisat, Methylanthranilat, Ethylpyruvat, Ethyl-α-butylbutyrat, Benzylpropionat, Butylacetat, Butylbutyrat, p-tert-Butylcyclohexylacetat, Cedrylacetat, Citronellylacetat, Citronellylformiat, p-Cresylacetat, Ethylbutyrat, Ethylcaproat, Ethylcinnamat, Ethylphenylacetat, Ethylenbrassylat, Geranylacetat, Geranylformiat, Isoamylsalicylat, Isoamylvalerat, Isobornylacetat, Linalylacetat, Methylanthranilat, Methyldihydroj asmonat, Nonylacetat, β-Phenylethylacetat, Trichlormethylenphenylcarbinylacetat, Terpinylacetat, Vetiverylacetat und ähnliche Ester. Diese Duftstoffe können einzeln verwendet werden oder mindestens zwei davon können im Gemisch miteinander verwendet werden, Neben dem Duftstoff kann die erfindungsgemäße Formulierung gegebenenfalls zusätzlich die in der Duftstoffindustrie üblichen Zusatzstoffe, wie Patchouliöl bzw. ähnliche flüchtigkeitshemmende Mittel, wie Eugenol bzw. ähnliche viskositätsregulierende Mittel enthalten.

Neben dem insektiziden Wirkstoff können in den erfindungsgemäßen Gelformulierungen technische Bakterizide und Fungizide vorliegen, wie z.B.

2,4,4-Trichlor-2'-hydroxyphenylether, 2,3,5,6-Tetrachlor-4-(methylsulfonyl)pyridin, Alkylbenzyldimethylammoniumchlorid, Benzyldimethyl-(2-)2-(p-1,1,3,3-tetramethylbutylphenoxy)ethoxy)ethyl)ammoniumchlorid, 4-Isopropyltropolon, N-Dimethyl-N-phenyl-N'-(fluordichlormethylthio)sulfonamid, 2-(4'-thiazolyl)benzimidazol, N-(Fluordichlormethylthio)phthalimid, 6-Acetoxy-2,4-dimethyl-m-dioxin, usw.
sowie landwirtschaftliche Bakterizide und Fungizide wie z.B.

Zinkethylenbisdithiocarbamat, Manganethylenbisthiocarbamat, Zinkmanebkomplex, Bisdimethyldithiocarbamoylzinkethylenbisdithiocarbamat, Bis(dimethylthiocarbamoyl)disulfid, das Isomer der Crotonsäure und 2,6-Dinitro-4-octylphenyl, usw.
oder Repellentien wie z.B.

Dimethylphthalat, 2,3,4,5-Bis-(Δ₂-butylen)tetrahydrofuran, 2,3,4,5-Bis-Δ₂-butylen)tetrahydrofurfurylalkohol, N,N-Diethyl-m-toluamid (im folgenden als "DEET" bezeichnet), Caprylsäure, Diethylamid, 2,3,4,5,-Bis(Δ₂-butylen)tetrahydrofurfural, Din-propylisocinchomeronat, sec.-Butylstyrylketon, Nonylstyrylketon, n-Propyl-acetanilid, 2-Ethyl-1,3-hexandiol, Di-n-butylsuccinat, 2-Butoxyethyl-2-furfurylidenacetat, Dibutylphthalat, Tetrahydrothiophen, β-Naphthol, Diallylsulfid, Bis(dimethylthiocarbamoyl)disulfid, usw.

Nagetier-Abwehrmittel wie z.B.

Tetramethylthiuramdisulfid, Guanidin, Naphthalencresol, Cycloheximid, Zinkdimethyldithiocarbamat, Cyclohexylamin, N,N-Dimethylsulphenyldithiocarbamat, usw.

Abwehrmittel gegen Hunde und Katzen wie z.B.

2,6-Dimethyloctadien-(2,6)-al(8) (im folgenden als "Citral" bezeichnet), O,O-Diethyl-S-2-ethylthioethyldithiophosphat (im folgenden als "ETP" bezeichnet), O,O-Dimethyl-S-2-isopropylthioethyldithiophosphat (im folgenden als "MIP" bezeichnet) usw.

Vogel-Abwehrmittel wie z.B.

Chloralose, 4-(Methylthio)-3,5-xylyl-N-methylcarbamat, 4-Aminopyridinanthrachinon, Tetramethylthiuramdisulfid, Diallyldisulfid, usw.

Rodentizide wie z.B.

Natriummonofluoracetat, Warfarin, Coumachlor, Fumarin, Norbomid, N-3-pyridylmethyl-N'-nitrophenylharnstoff, α-Naphthylthioharnstoff, Thiosemicarbazid, Difenacoum, Pival, Chlorphacinon, Calciferol, usw.

Die Herstellung der erfindungsgemäßen Gelformulierungen wird vorzugsweise unter Verwendung von Lösungsmitteln durchgeführt. Als Verdünnungsmittel kommen dabei praktisch alle inerten organischen Lösungsmittel in Frage. Hierzu gehören vorzugsweise aliphatische und aromatische, gegebenenfalls halogenierte Kohlenwasserstoffe wie Pentan, Hexan, Heptan, Cyclohexan, Petrolether, Benzin, Ligroin, Benzol, Toluol, Xylol, Methylenchlorid, Ethylenchlorid, Chloroform, Tetrachlormethan, Chlorbenzol und o-Dichlorbenzol, Ether wie Diethyl- und Dibutyl-ether, Glykoldimethylether und Diglykoldimethylether, Tetrahydrofuran und Dioxan, Ketone wie Aceton, Methyl-ethyl-, Methyl-isopropyl- und Methyl-isobutyl-keton, Ester wie Essigsäure-methylester und -ethylester, Nitrile wie z.B. Acetonitril und Propionitril, Amide wie z.B. Dimethylformamid, Dimethylacetamid und N-Methylpyrrolidon sowie Dimethylsulfoxid, Tetramethylensulfon, Hexamethylphosphorsäuretriamid und Shellsol T®.

Die Formulierungen enthalten im allgemeinen zwischen 0,1 und 95 Gew.-% insektiziden Wirkstoff, vorzugsweise zwischen 0,5 und 90 Gew.-%.

Die Formulierungen enthalten weiterhin im allgemeinen zwischen 1 und 90 Gew.-% Verdampfungsmodifikatoren, vorzugsweise zwischen 40 und 80 Gew.-% sowie im allgemeinen zwischen 1 - 8 Gew.-% Gelbildner, vorzugsweise zwischen 3 - 6 Gew.-%. Das Verhältnis Wirkstoff/Verdampfungsmodifikator beträgt in den erfindungsgemäßen Insektizid-enthaltenden Gelformulierungen zwischen 9 und 0,5, bevorzugt bei 1. Die Herstellung und die Verwendung der erfindungsgemäßen Insektizid-enthaltenden Gelformulierungen geht aus den nachfolgenden Beispielen hervor:

**Tabelle 1**

| Beispiel | Gehalt Insektizid | Gelbildner | Stabilisator | Verdampfungsmodifikator | Lösungsmittel |
|---|---|---|---|---|---|
| 1 | 39,5 % Transfluthrin® | 4 % Aerosil 200® | 1 % BHT | 55,5 % Diphyl THT® | - |
| 2 | 39,5 % Transfluthrin® | 6 % Aerosil 200® | 1 % BHT | 53,5 % Diphyl THT® | - |
| 3 | 23,8 % Transfluthrin® | 3,6 % Aerosil 200® | 0,6 % BHT | 32 % Diphyl THT® | 40 % Shellsol T® |

### Beispiel 1

Die Herstellung der insektizid-enthaltenden Gelformulierung gemäß Beispiel 1 erfolgt folgendermaßen:

In einer Bekumix-Rührapparatur werden für einen 100 kg Ansatz 39,5 kg flüssiges Transfluthrin® (Temperatur ca. 40°C) vorgelegt, 55 kg Diphyl THT® und 1 kg BHT zugegeben und bis zur klaren Lösung verrührt. Zusätzlich können in die Formulierung bevorzugt die Parfümöle Aurantiol, Citronellöl, C10-C16 Aldehyd, Birkenteeröl, Benzylsalicylat, Lavendelöl, Rosenöl in Kombnation mit, bzw. ohne die Farbstoffe Hostasol gelb 36®, Resolin-Brillantrot BLS®, 1,4-Diaminoanthrachinon, Alizarin VK6/225®, Fettrot HRR®, Fettrot G®, Solvaperm Grün®G, Sudan Blau 670® eingerührt werden. In die klare Lösung werden unter schnellem Rühren 4 kg Aerosil 200® bis zur Gelbildung unter Vakuum eingetragen.

Zur Anwendung werden die Gelformulierungen, je nach Anwendungsdauer, im allgemeinen in Mengen von 0,2 - 5 g, vorzugsweise in Mengen von 0,2 - 3 g in tiefgezogene oder gegossene Behälter gefüllt und mit Polypropylenfolie versiegelt. Bevorzugte Behältermaterialien sind Aluminium, Polyester, Polyethylen, Metalle. Die Behältergröße ist so ausgewählt, daß die Bodenfläche des Behälters gleich groß wie die Heizfläche des Heizgerätes ist und Temperaturen von 70 bis 110°C überträgt.

Die geregelte und langanhaltende Freisetzung von insektiziden Wirkstoffen wird durch die Anwendung von Beispiel 1 wie folgt dargestellt:

1,5 g der insektizid-enthaltenden Gelformulierung werden in einem tiefgezogenen Aluminiumbehälter mit den Maßen (4 x 2,5 x 0,4 cm) gleichmäßig auf der Oberfläche verteilt und mit PP-Folie Walothen C50SE® versiegelt. In einem Heizgerät mit einer Temperatur von 100 - 110°C wird der Behälter täglich 8 Stunden erwärmt und die Abgabemengen an Wirkstoff bestimmt. Die abgedampfte Menge an Insektizid wird durch:
1. gravimetrische Bestimmung der Abdampfmengen und Analyse des Rückstandes bestimmt
2. Analyse der entweichenden Insektiziddämpfe mit Hilfe einer speziellen Apparatur bestimmt: Hierbei wird direkt über dem Heizgerät ein mit Kieselgel befüllter Trichter installiert, der die entweichenden Insektiziddämpfe unter einem leichten, gleichmäßigen Luftstrom absorbiert. Die im Trichter absorbierten Insektizid-Rückstände werden mit Aceton ausgewaschen, in Meßkolben überführt und mittels Gaschromatographie analysiert, um den Verflüchtigungsgrad festzustellen.

Die Ergebnisse der Abdampfversuche sind in Tabelle 2 dargestellt.

Die insektizid-enthaltende Gelformulierung gemäß Beispiel 1 wurde jeweils mit einem Langzeitverdampfer-System, wie es aus dem Stand der Technik (GB 2 153 227) bekannt ist, verglichen. Die Ergebnisse sind in Tabelle 3 dargestellt. Aufgrund der vorliegenden Ergebnisse ist es bedenkenlos möglich, die bevorzugte Anwendungsdauer von 60 Tagen zu erreichen.

Anschließend wurden beide Formulierungen in biologischen Tests miteinander verglichen.

Die Wirksamkeit der erfindungsgemäßen insektizid-enthaltenen Gelformulierung gemäß Beispiel 1 in oben getestetem System, ist deutlich besser als die bereits aus dem Stand der Technik bekannten Flüssigkeitsformulierungen in Langzeitverdampfer-Systemen.

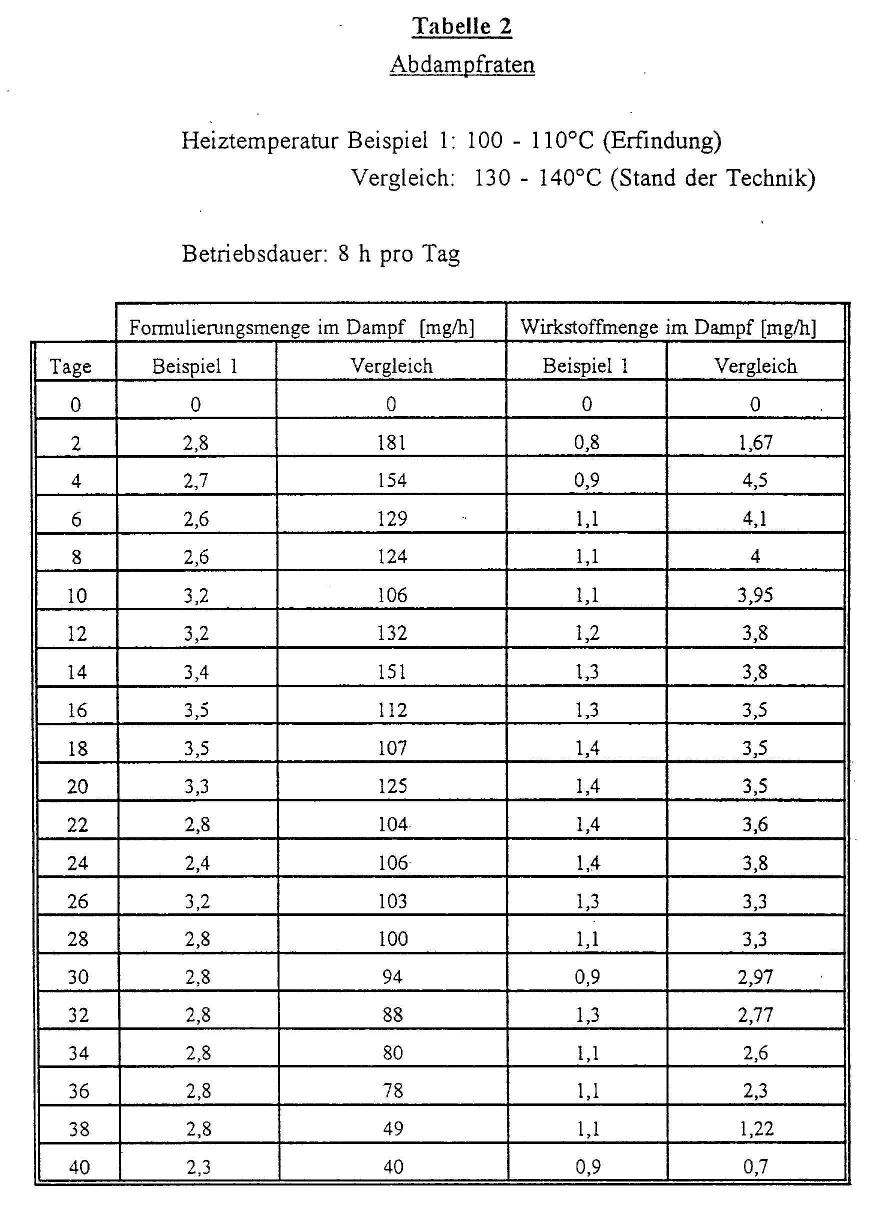

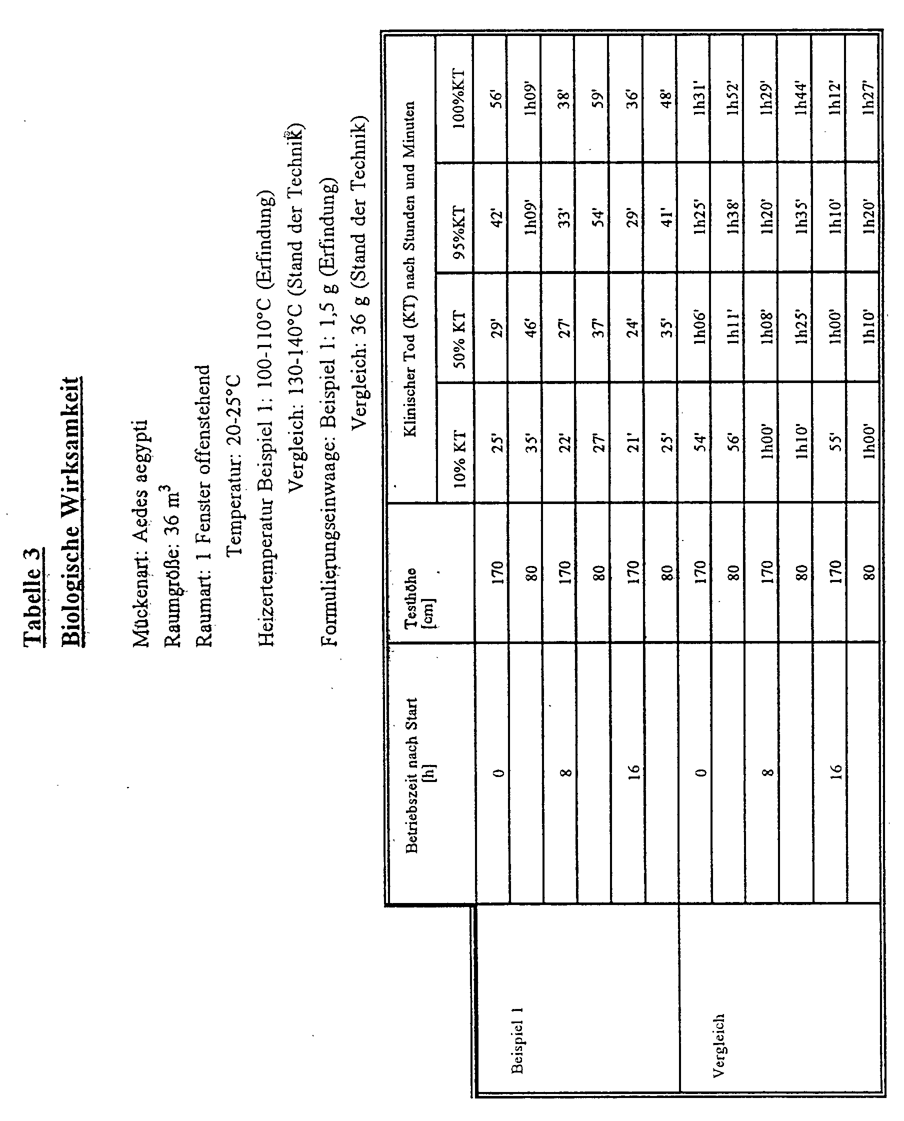

In einem zweiten Versuch konnte die Anwendungsdauer von 60 Tagen der Insektizid-enthaltenden Gelformulierung gemäß vorliegender Erfindung bestätigt werden.

### Tabelle 4

### Biologische Wirksamkeit

Insektizide Wirkung der erfindungsgemäßen Insektizid-enthaltenden Gelformulierung in Verdampfersystemen
Mückenart: Aedes aegypti
Raumgröße: 36 m³
Raumart:
   1 Fenster offenstehend
   Temperatur: 23-30°C
   rel. Raumfeuchte: 35-74 %
Heizertemperatur: 100-110°C
Gehalt an Wirkstoff: 39,5 % Transfluthrin
Formulierungseinwaage: 1,5 g

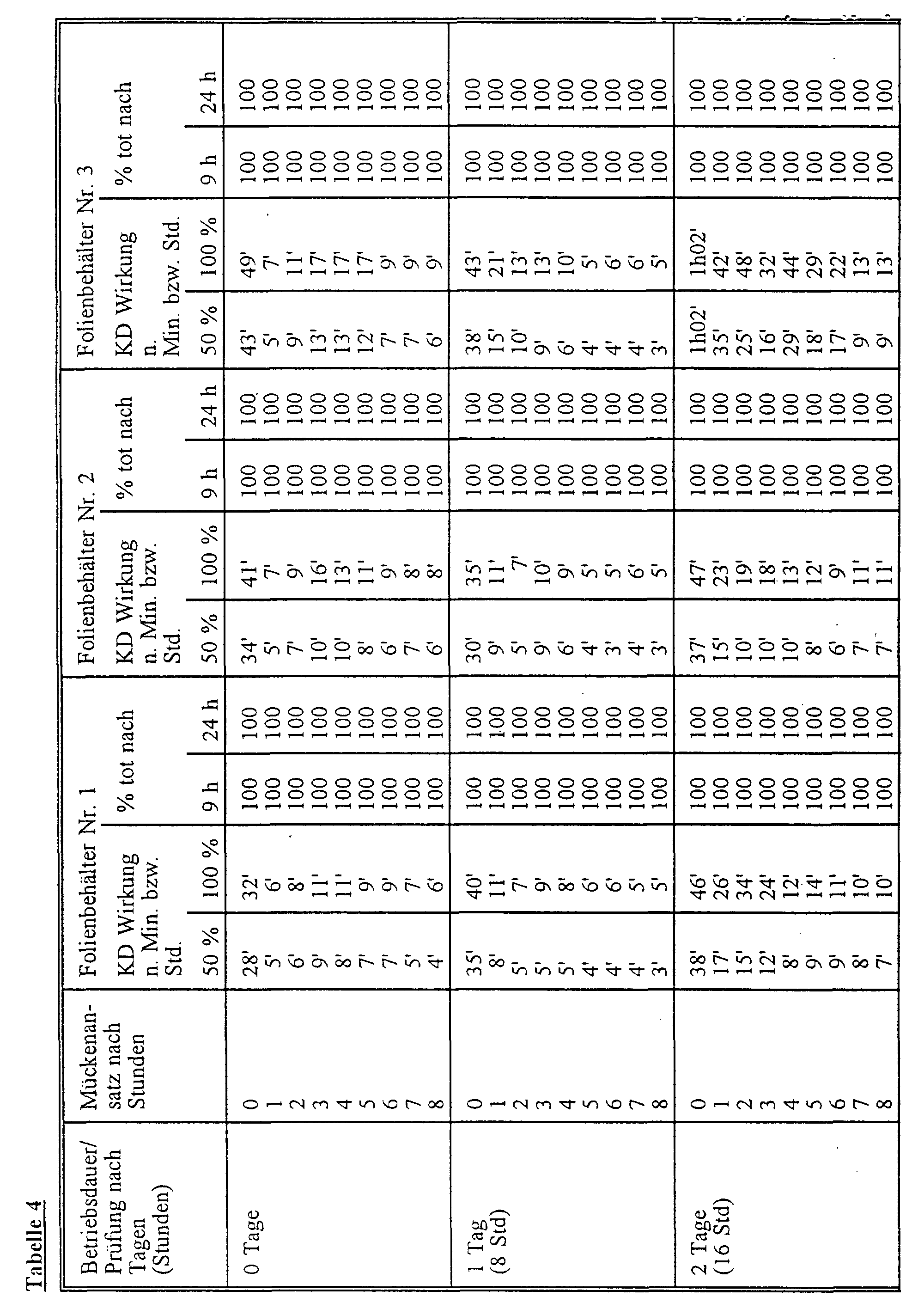

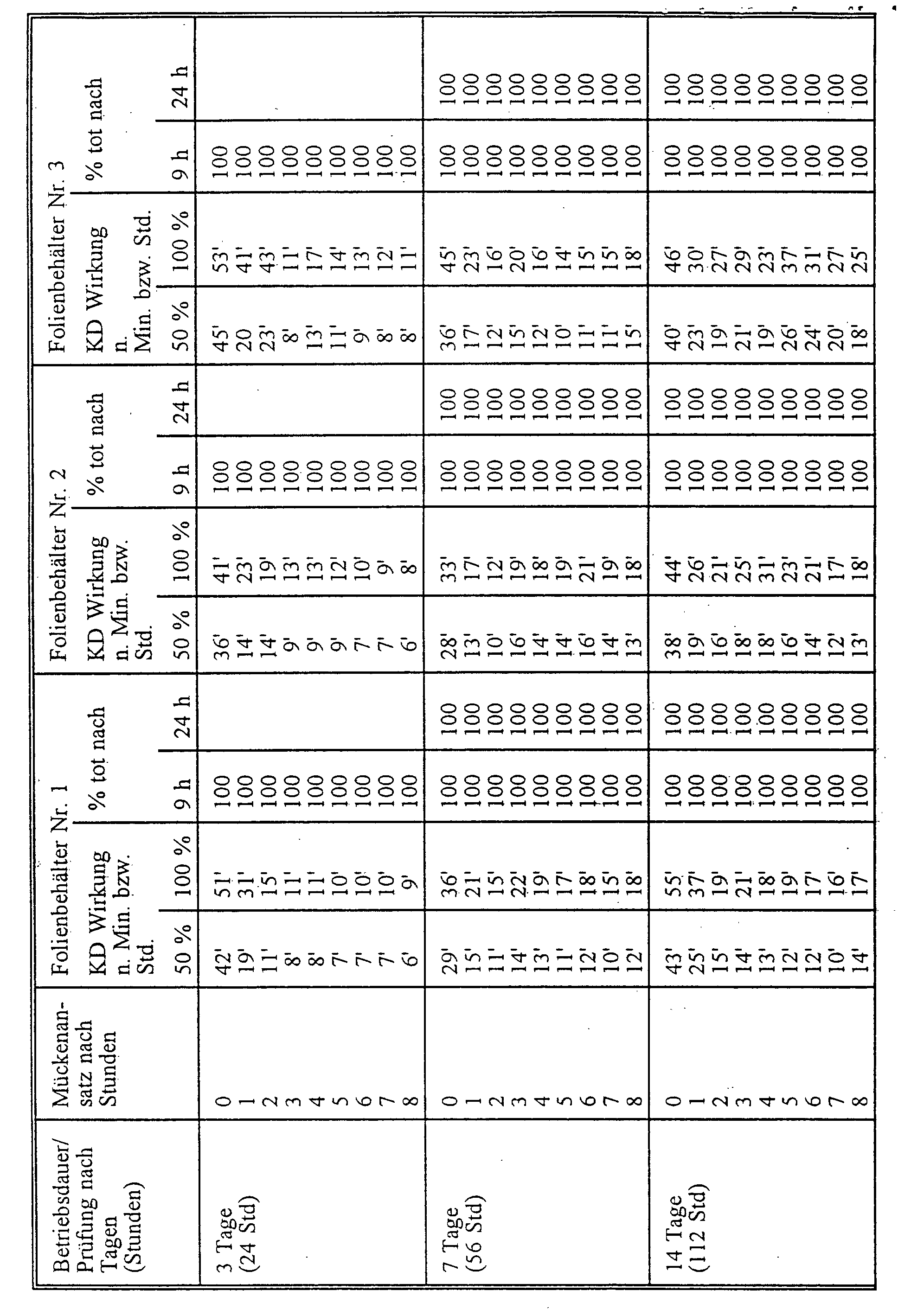

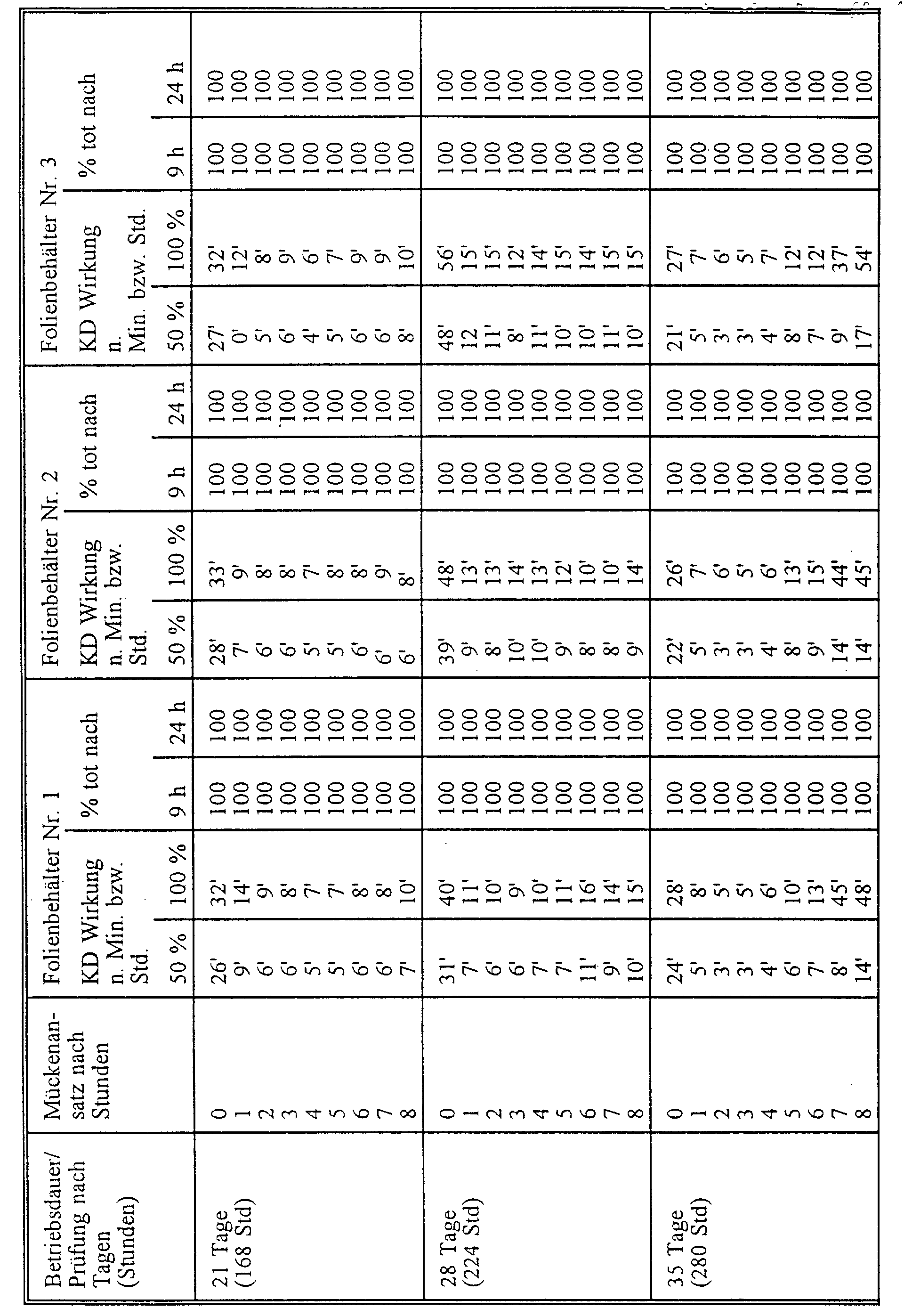

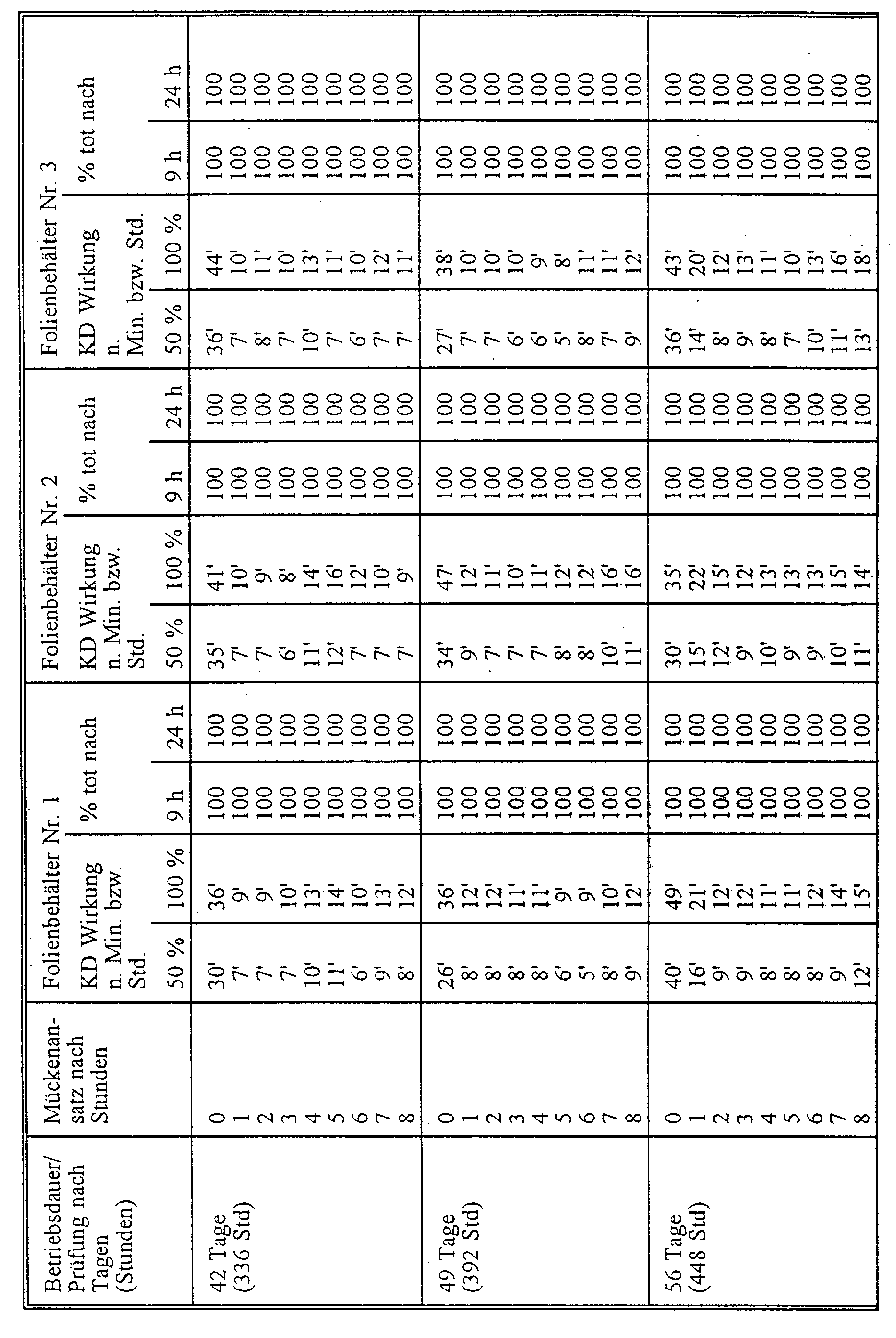

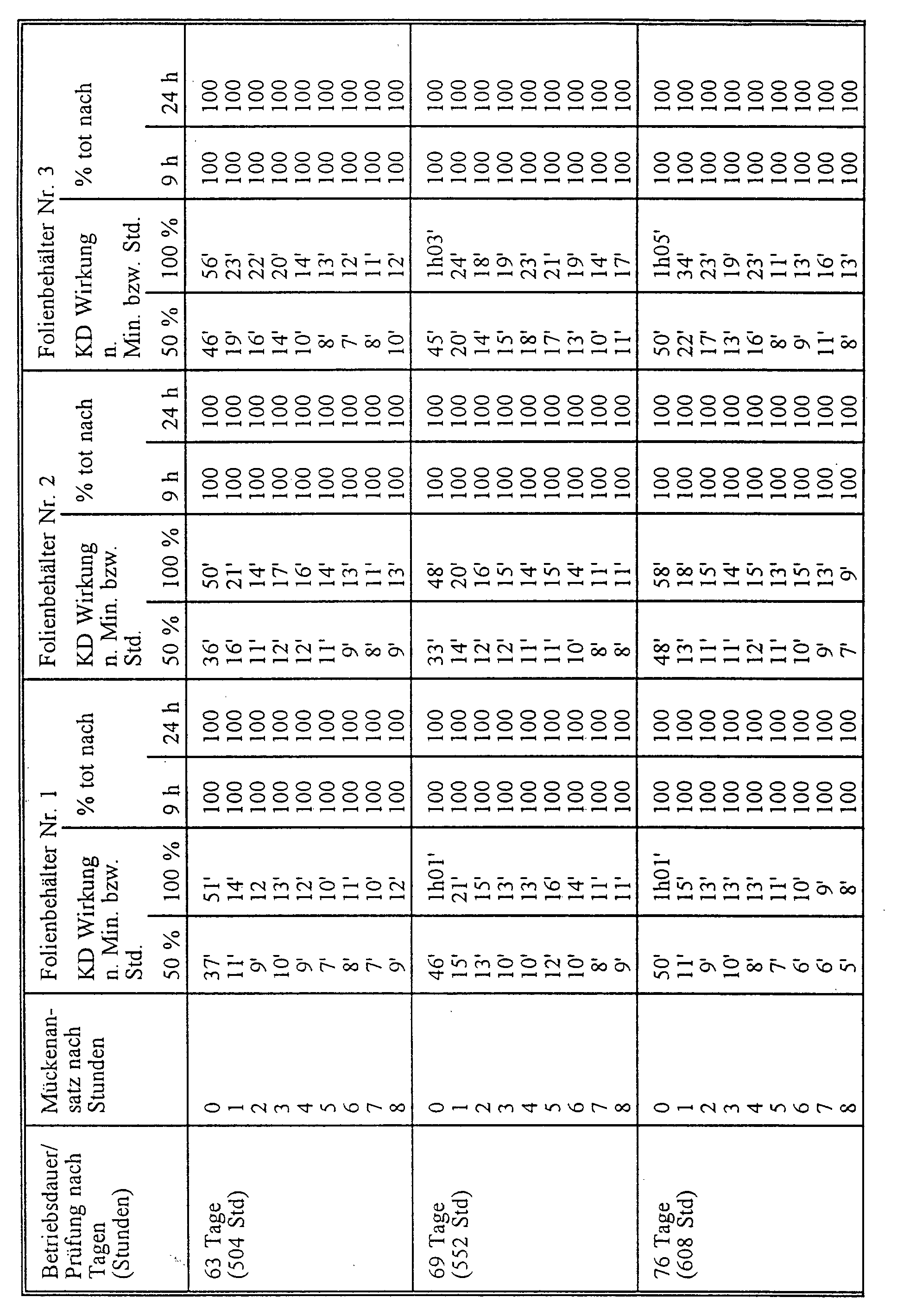

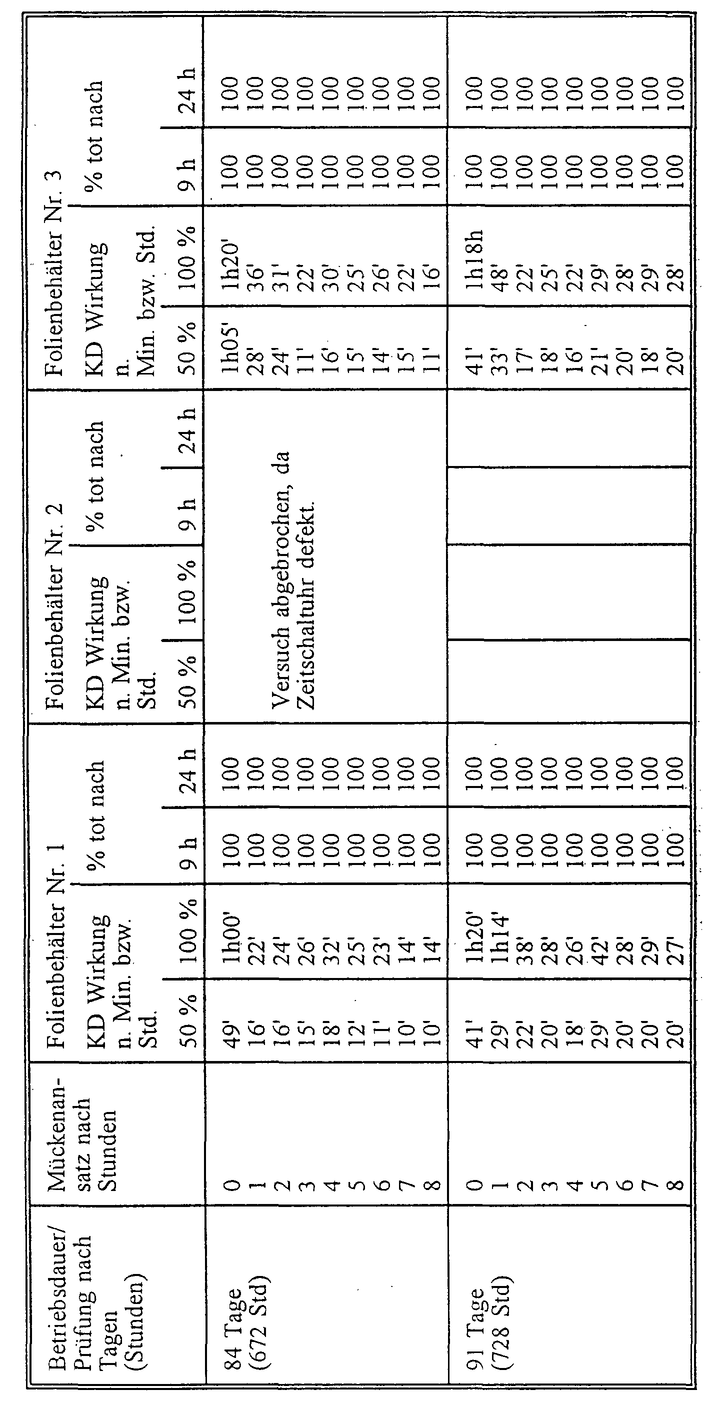

### Tabelle 5

### Biologische Wirksamkeit

Insektizide Wirkung der erfindungsgemäßen Insektizid-enthaltenden Gelformulierung in Verdampfersystemen
Mückenart: Culex quinquefasciatus
Raumgröße: 36 m³
Raumart:
   1 Fenster offenstehend
   Temperatur 23-30°C
   rel. Raumfeuchte 35-74 %
Heizertemperatur: 100-110°C
Gehalt an Wirkstoff: 39,5 % Transfluthrin
Formulierungseinwaage: 1,5 g

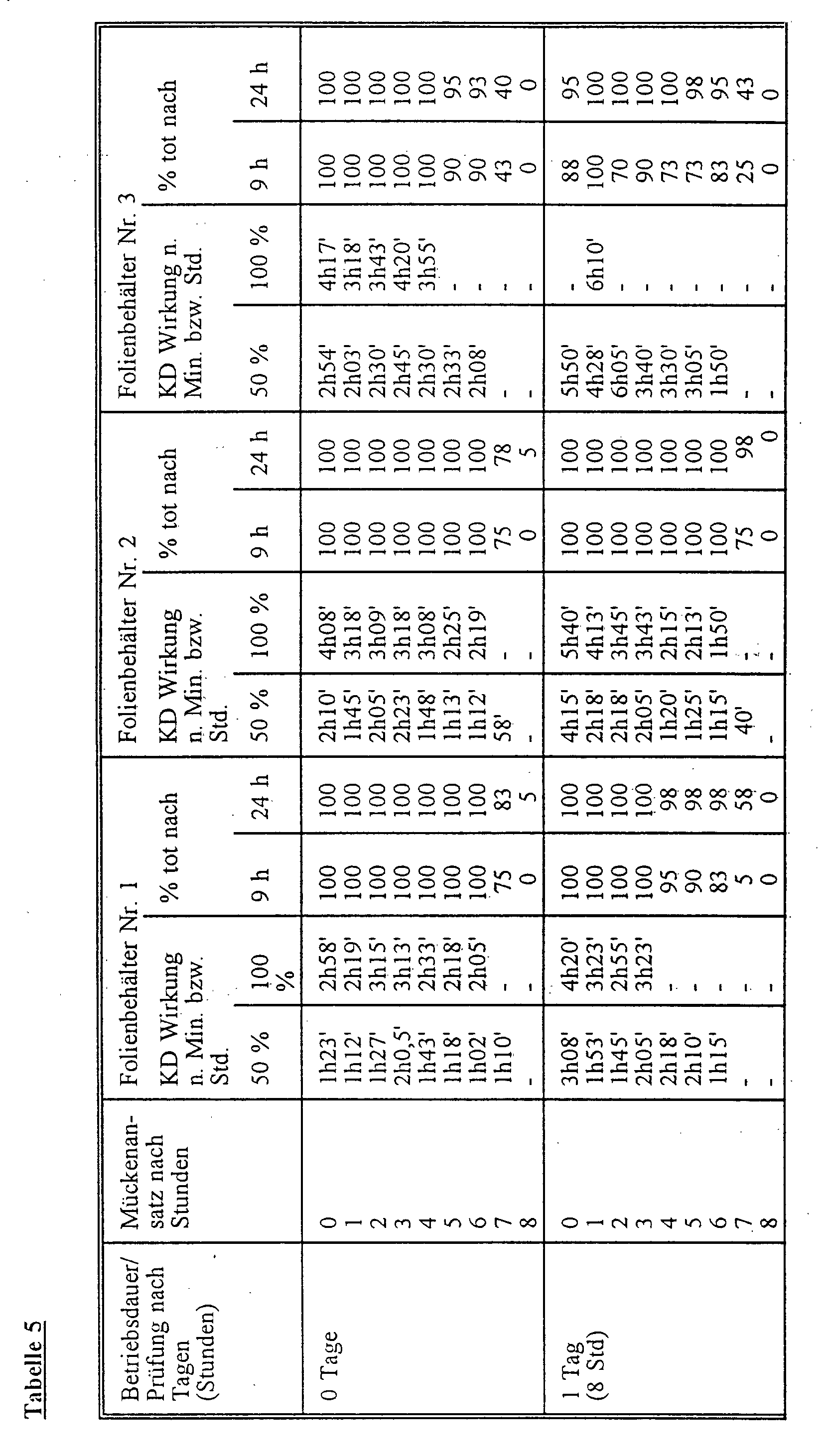

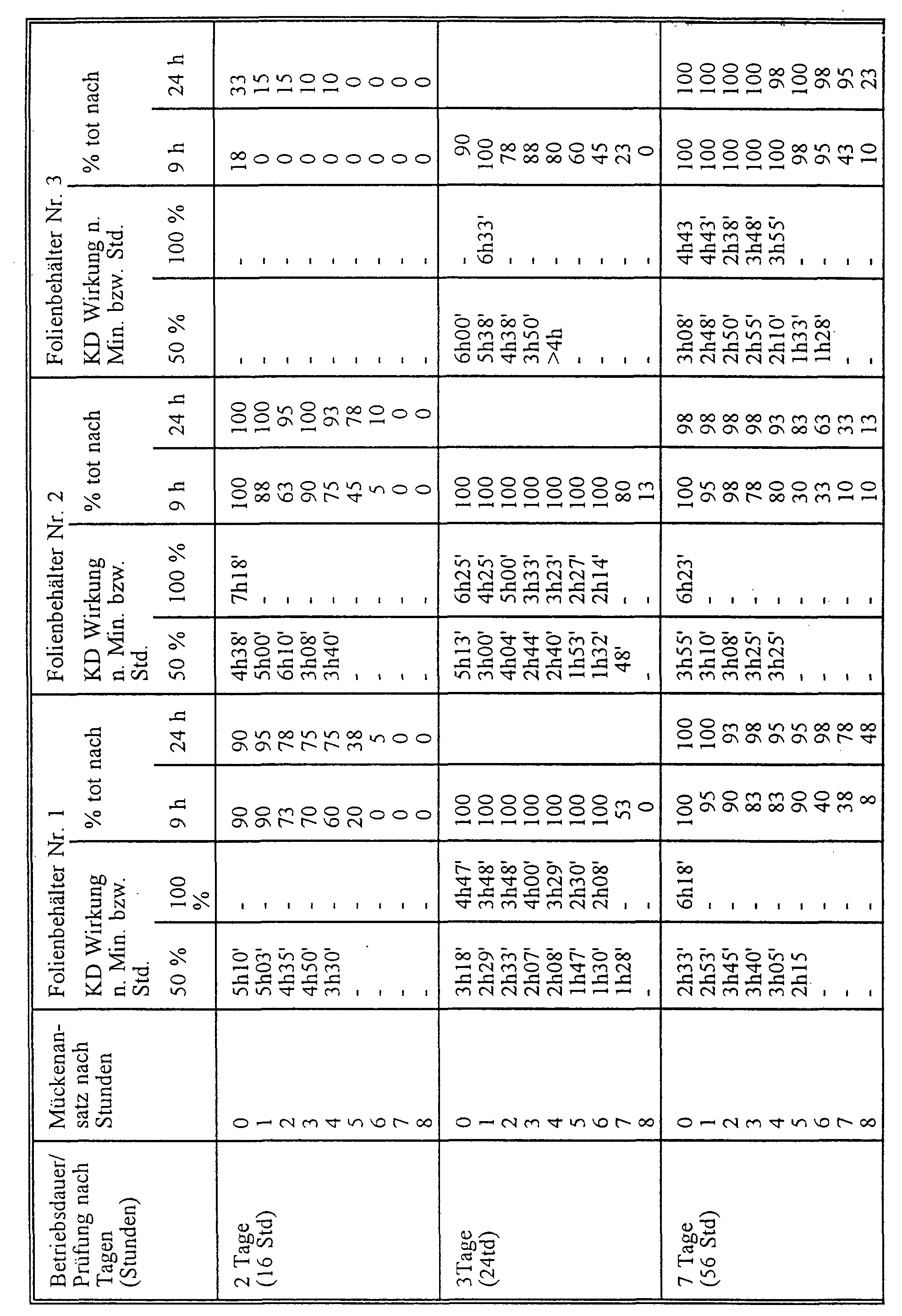

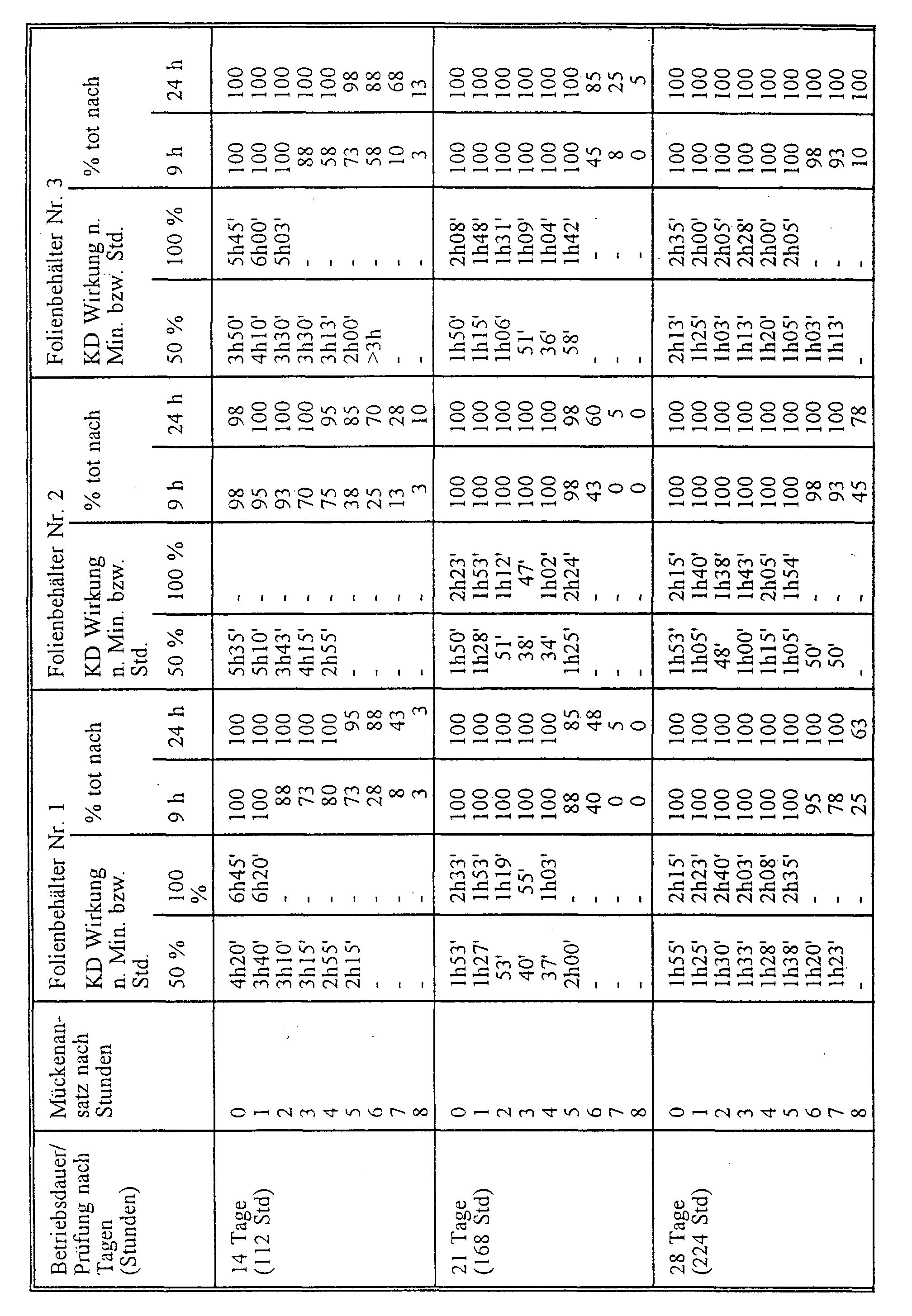

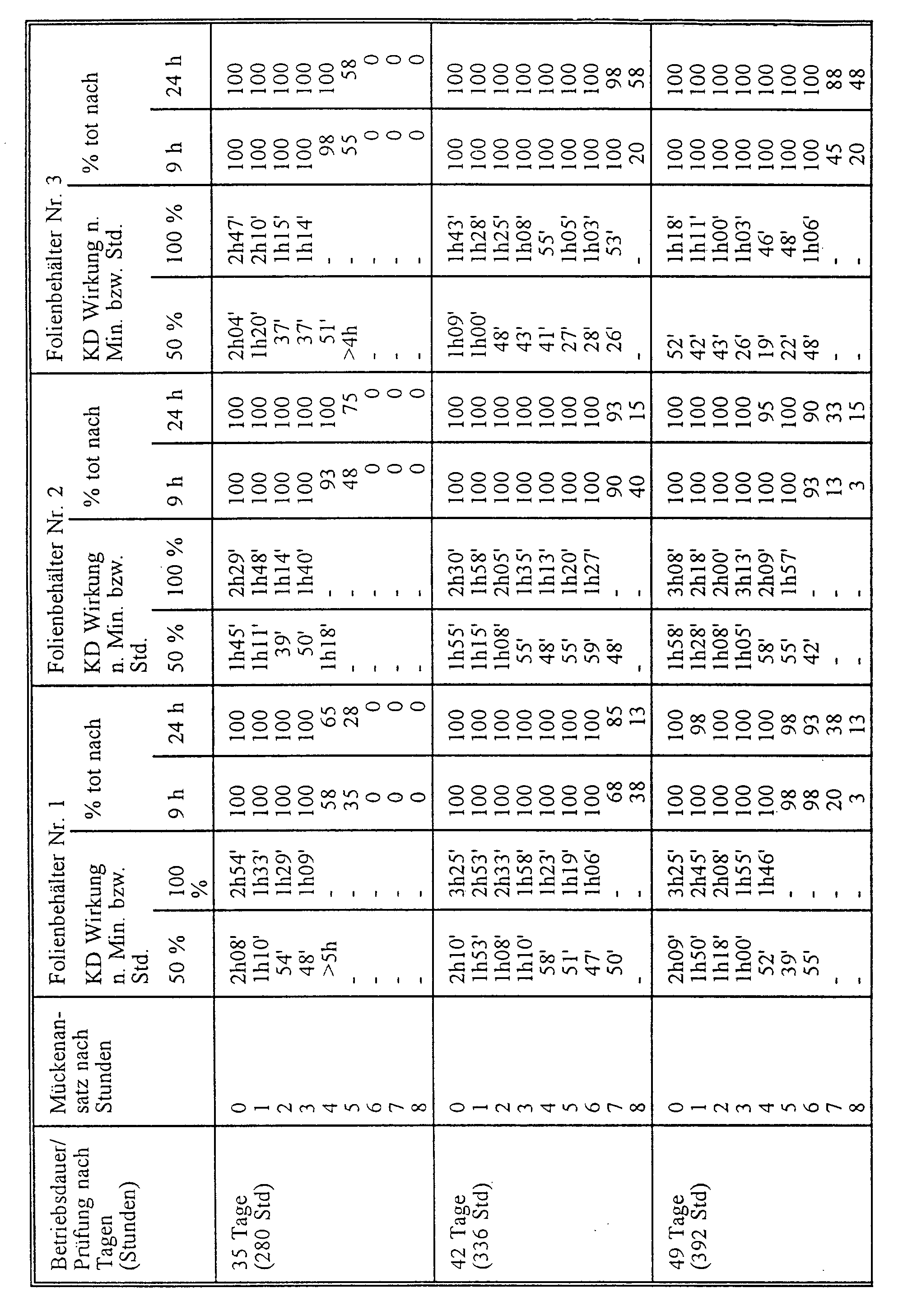

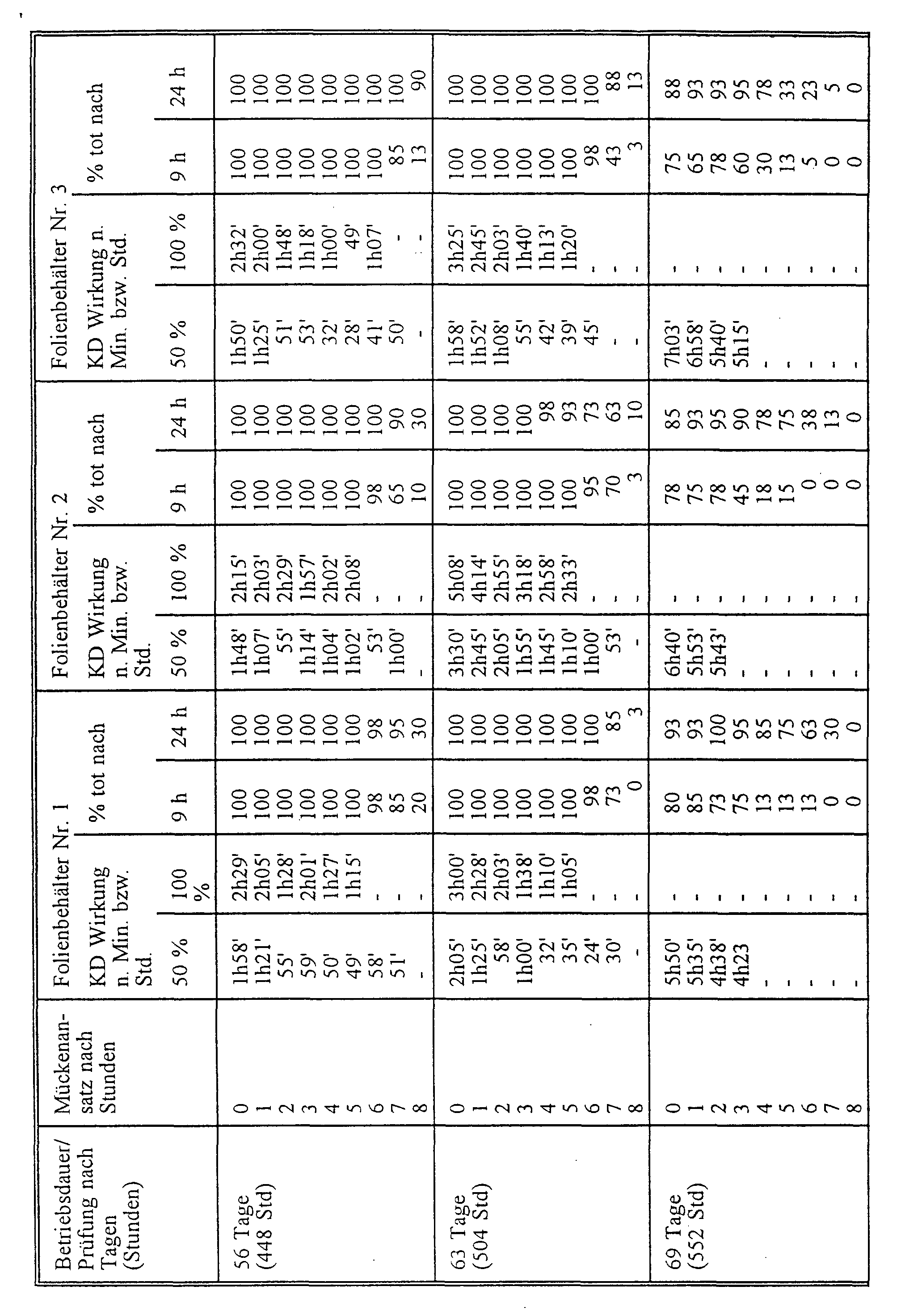

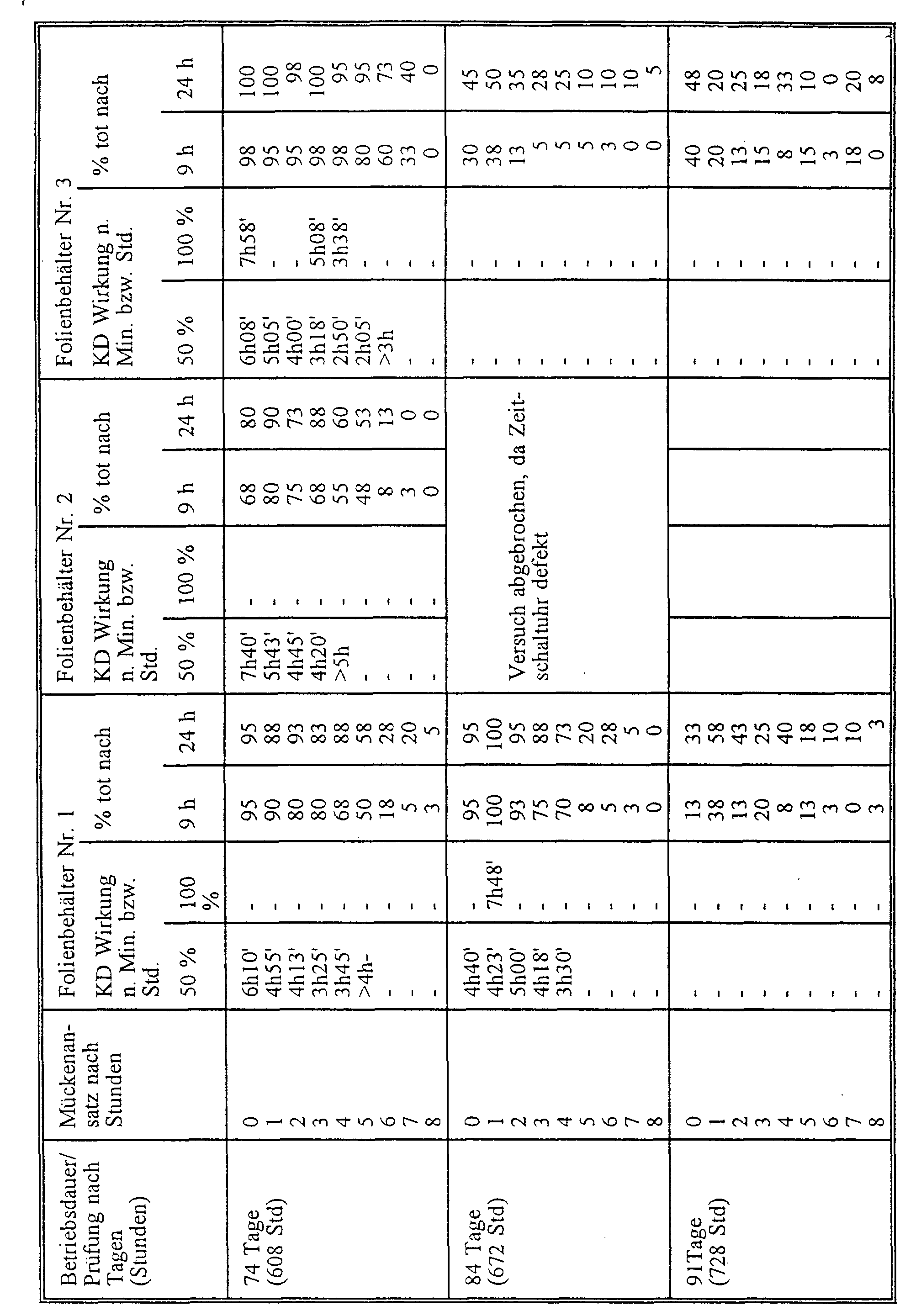

### Tabelle 6

### Biologische Wirksamkeit

Insektizide Wirkung der erfindungsgemäßen Insektizid-enthaltende Gelformulierung in Verdampfersystemen
Mückenart: Aedes aegypti
Raumgröße: 36 m³
Raumart:
   1 Fenster offenstehend
   Temperatur 23-29°C
   rel. Raumfeuchte 25-63 %
Heizertemperatur: 95°C
Gehalt an Wirkstoff: 39,5 % Transfluthrin
Formulierungseinwaage: 1,5 g

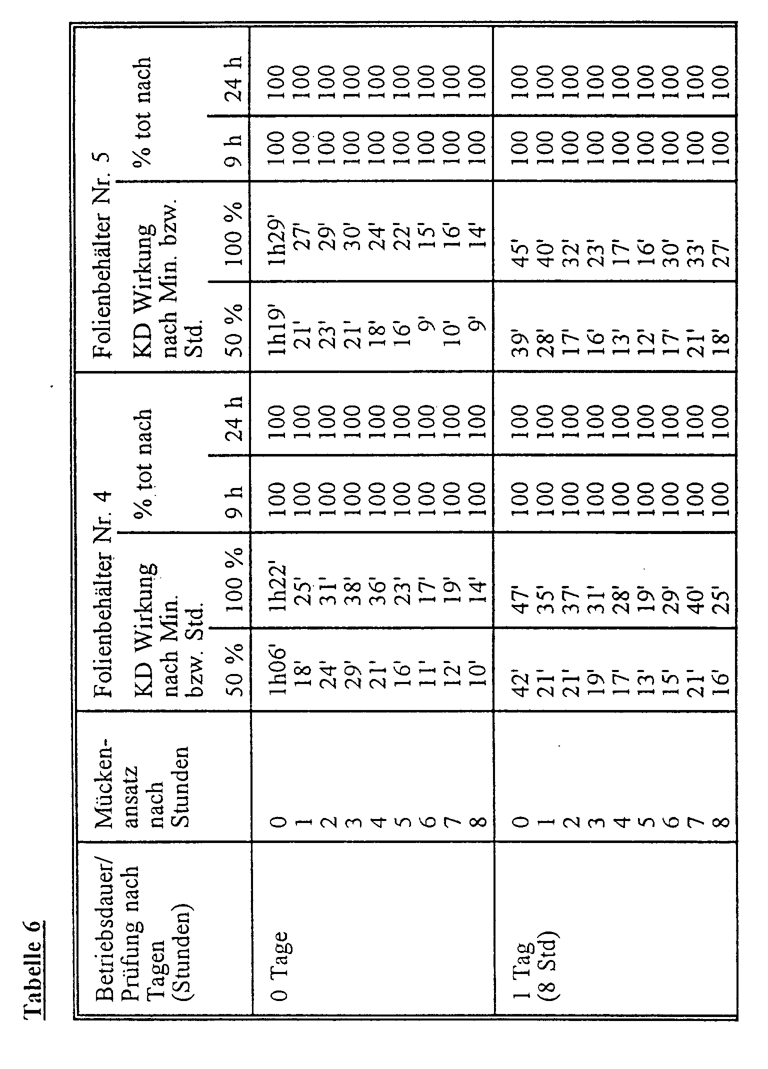

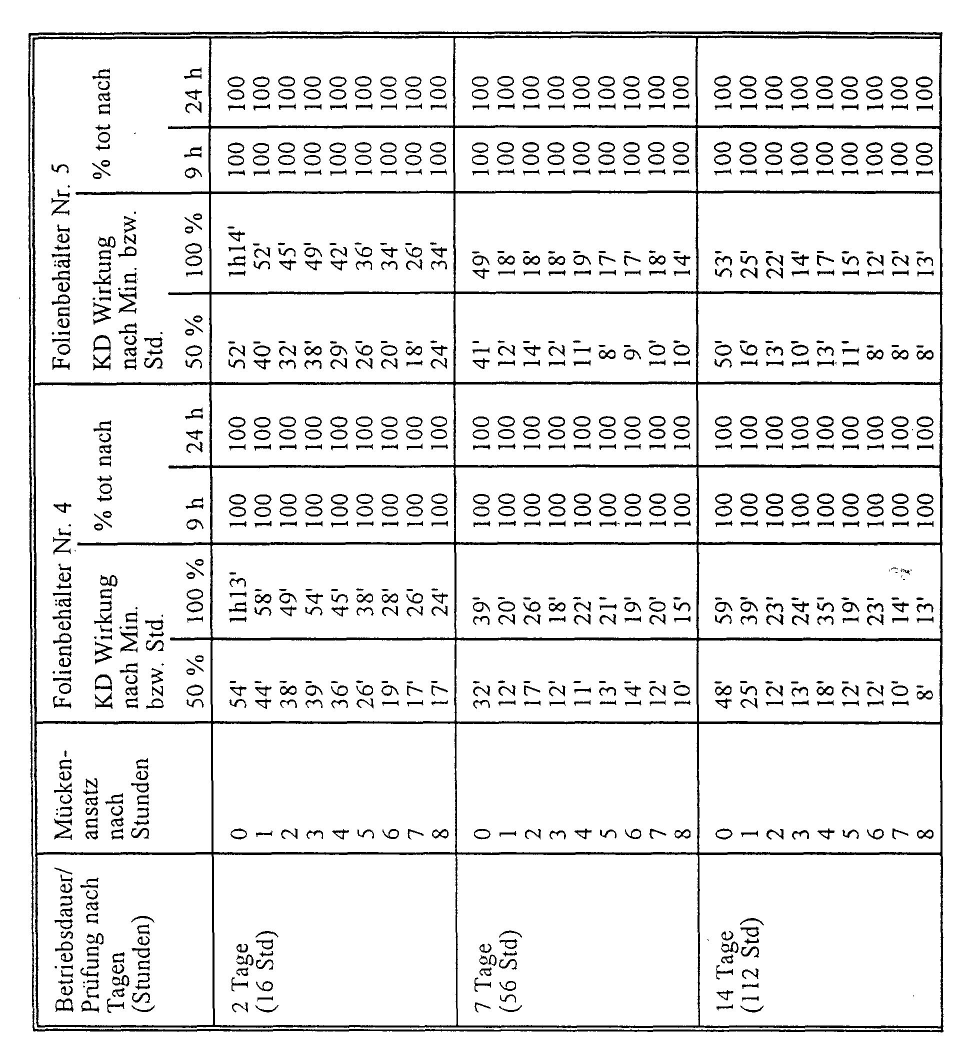

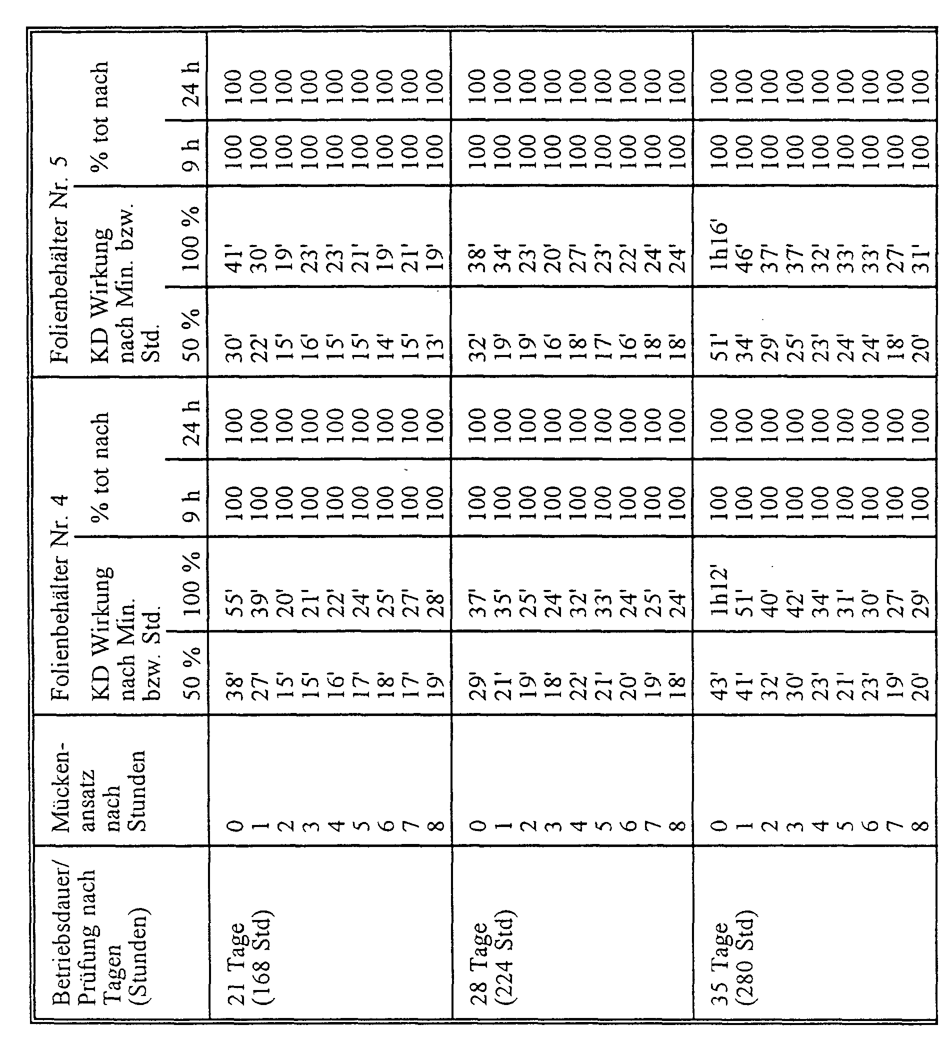

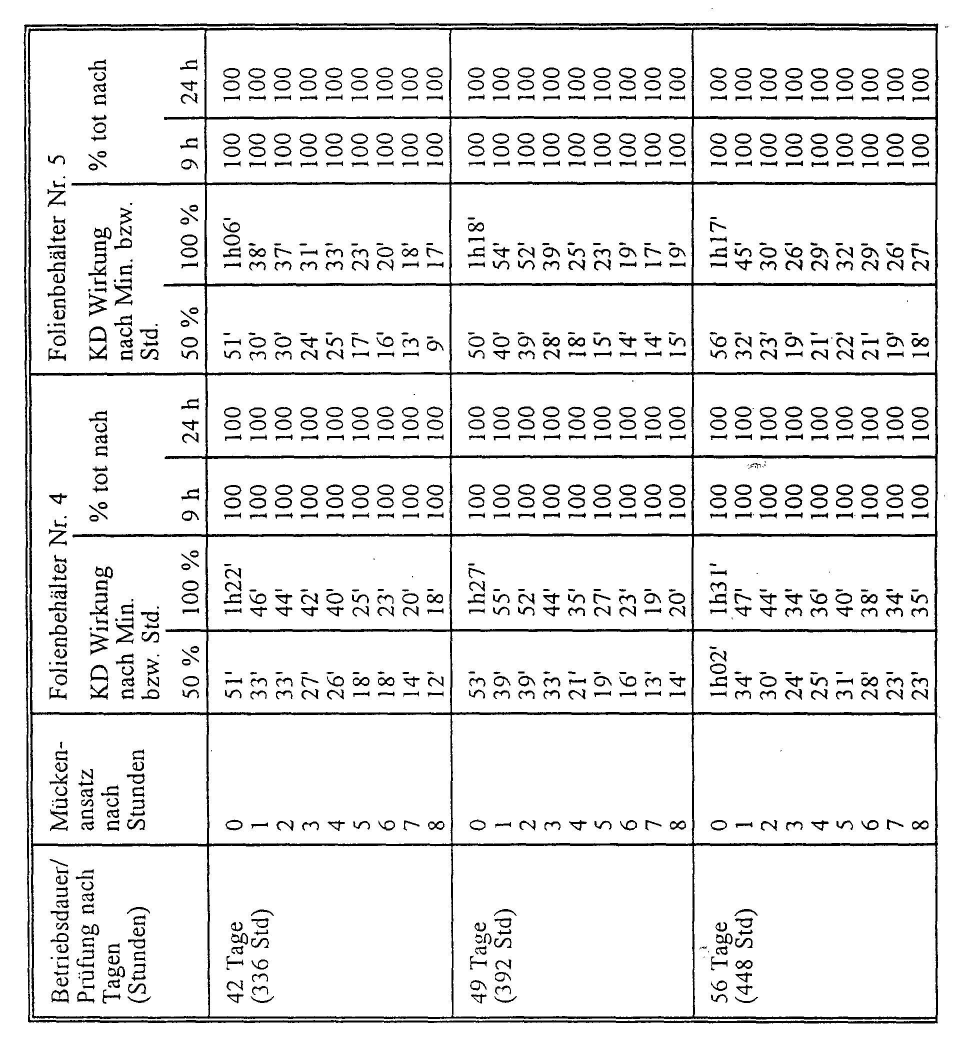

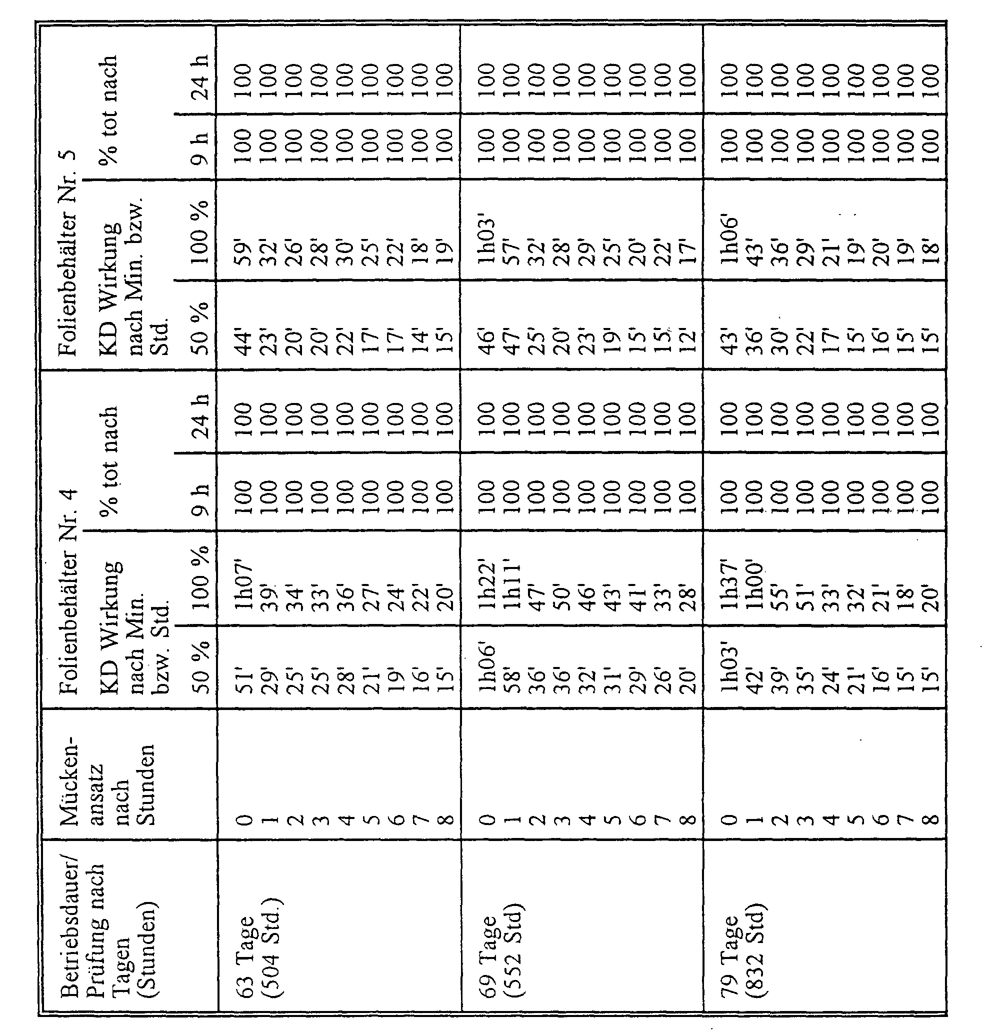

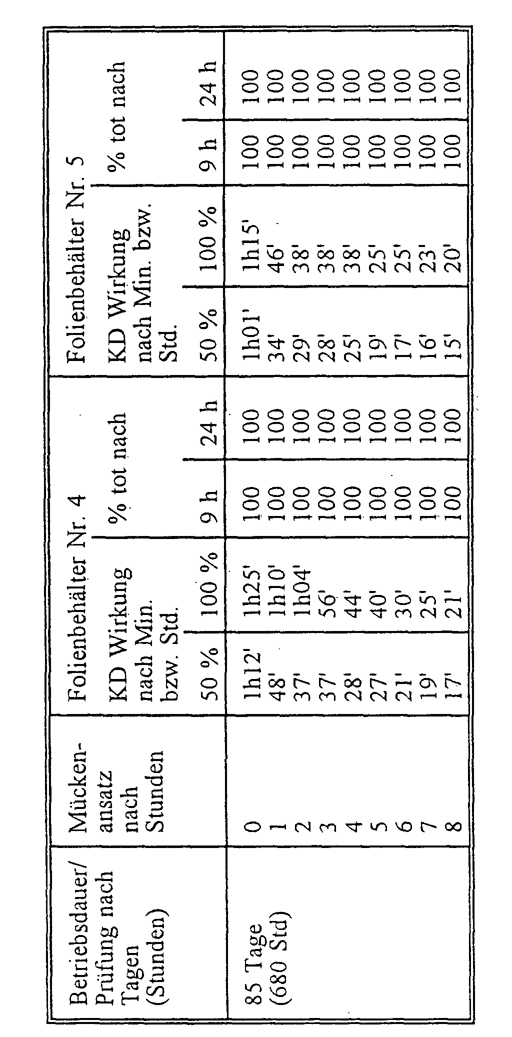

### Tabelle 7

### Biologische Wirksamkeit

Insektizide Wirkung der erfindungsgemäßen Insektizid-enthaltenden Gelformulierung in Verdampfersystemen
Mückenart: Culex quinquefasciatus
Raumgröße: 36 m³
Raumart:
   1 Fenster offenstehend
   Temperatur 23-29°C
   rel. Raumfeuchte 25-63 %
Heizertemperatur: 95°C
Gehalt an Wirkstoff: 39,5 % Transfluthrin
Formulierungseinwaage: 1,5 g

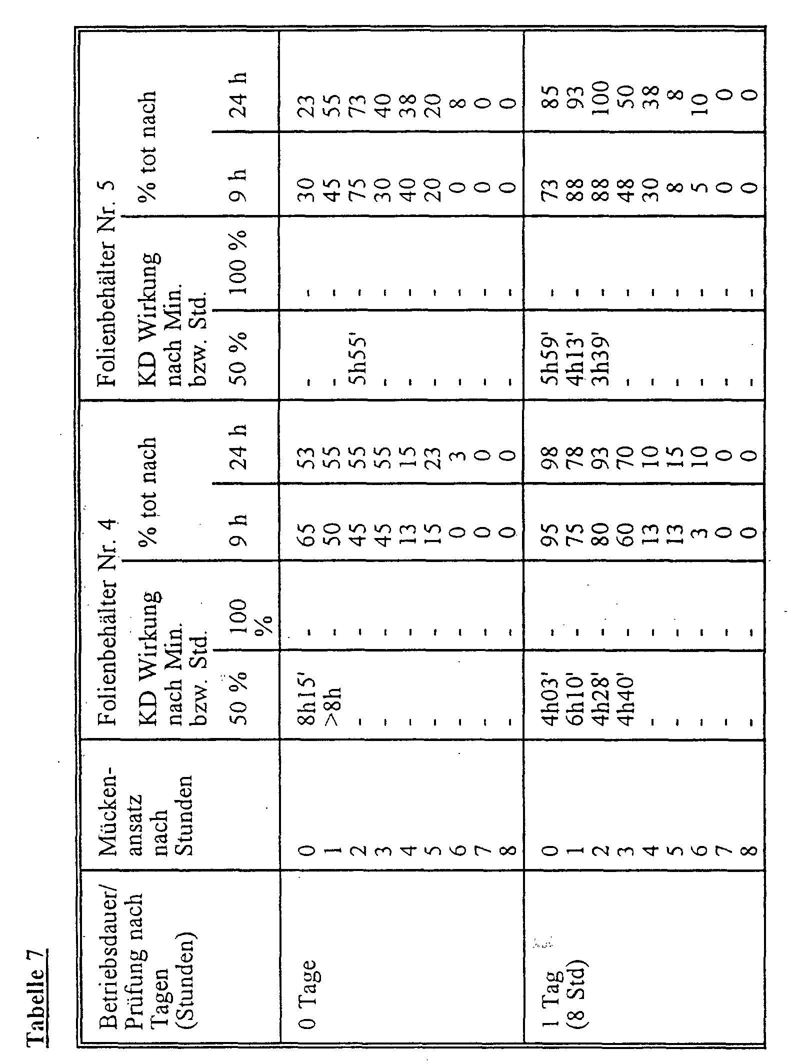

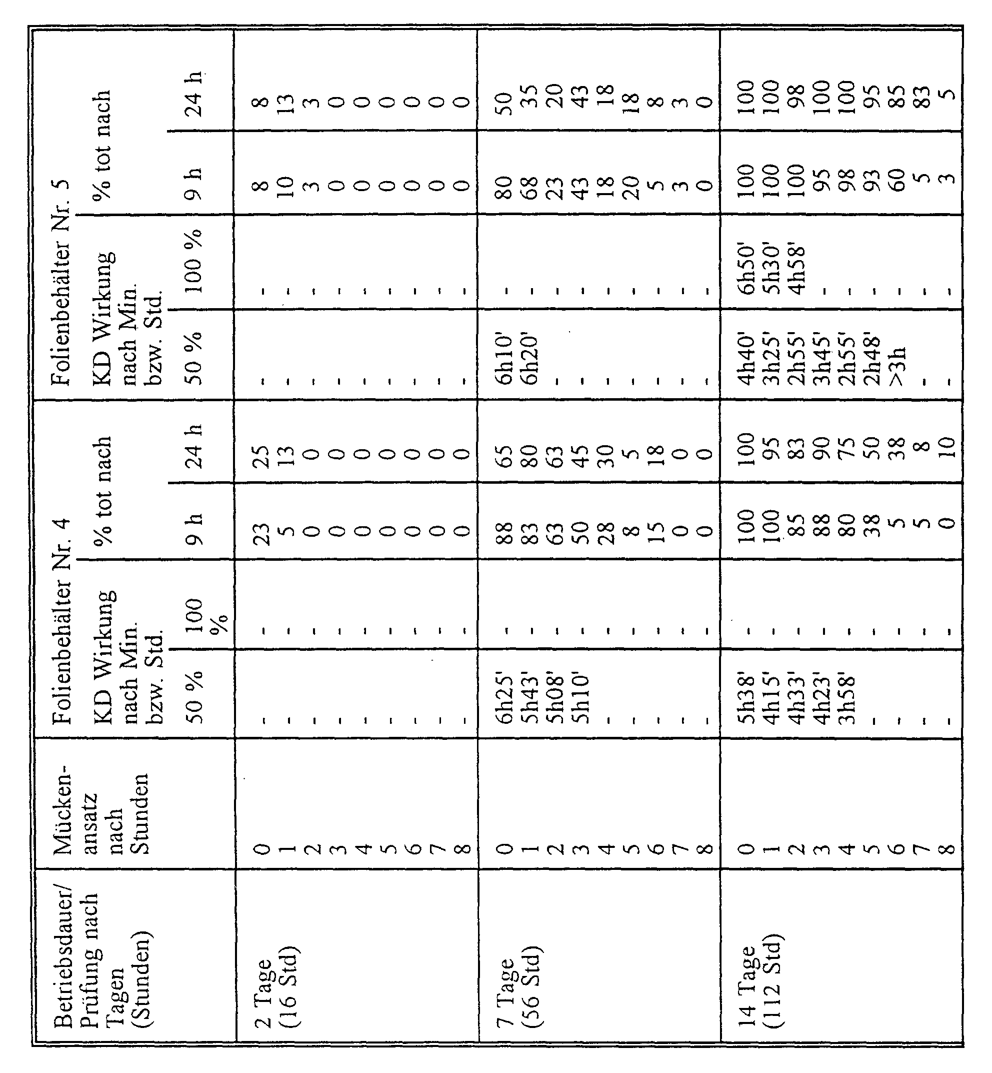

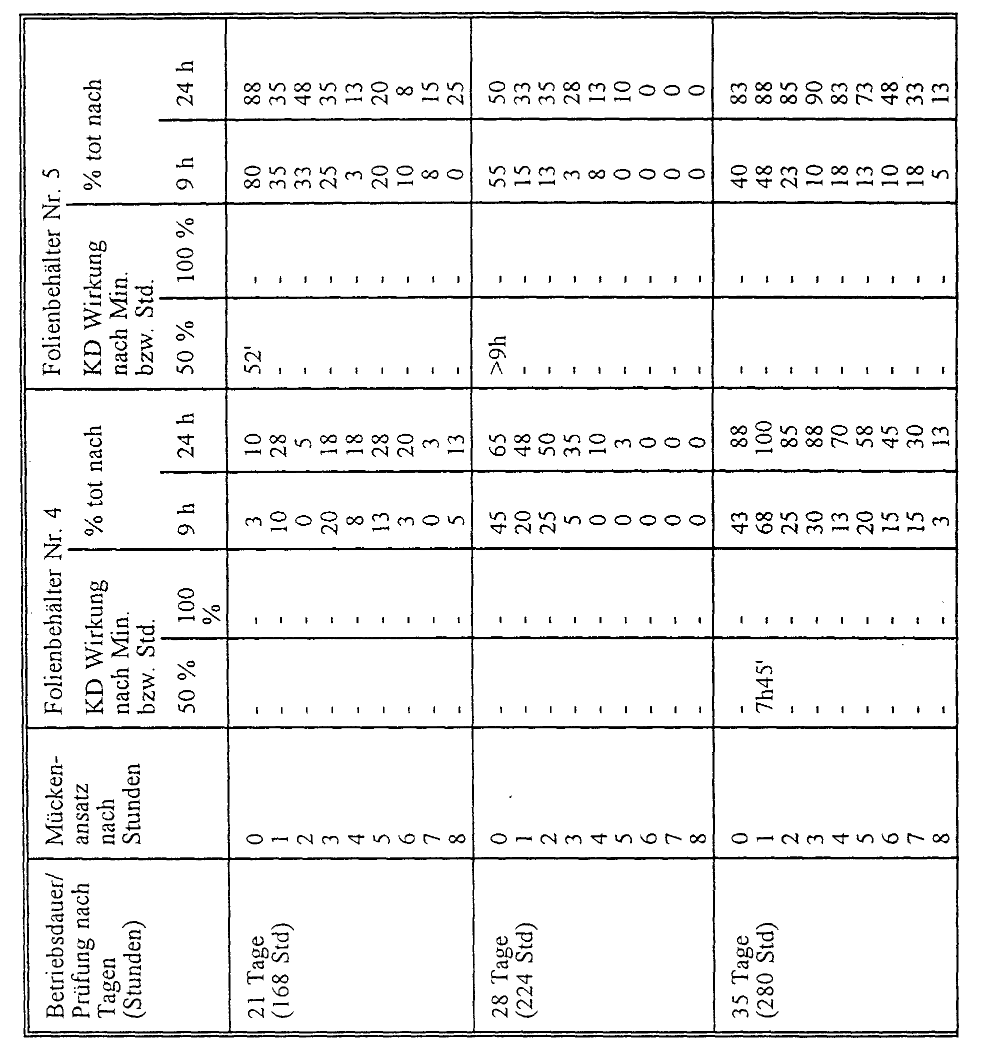

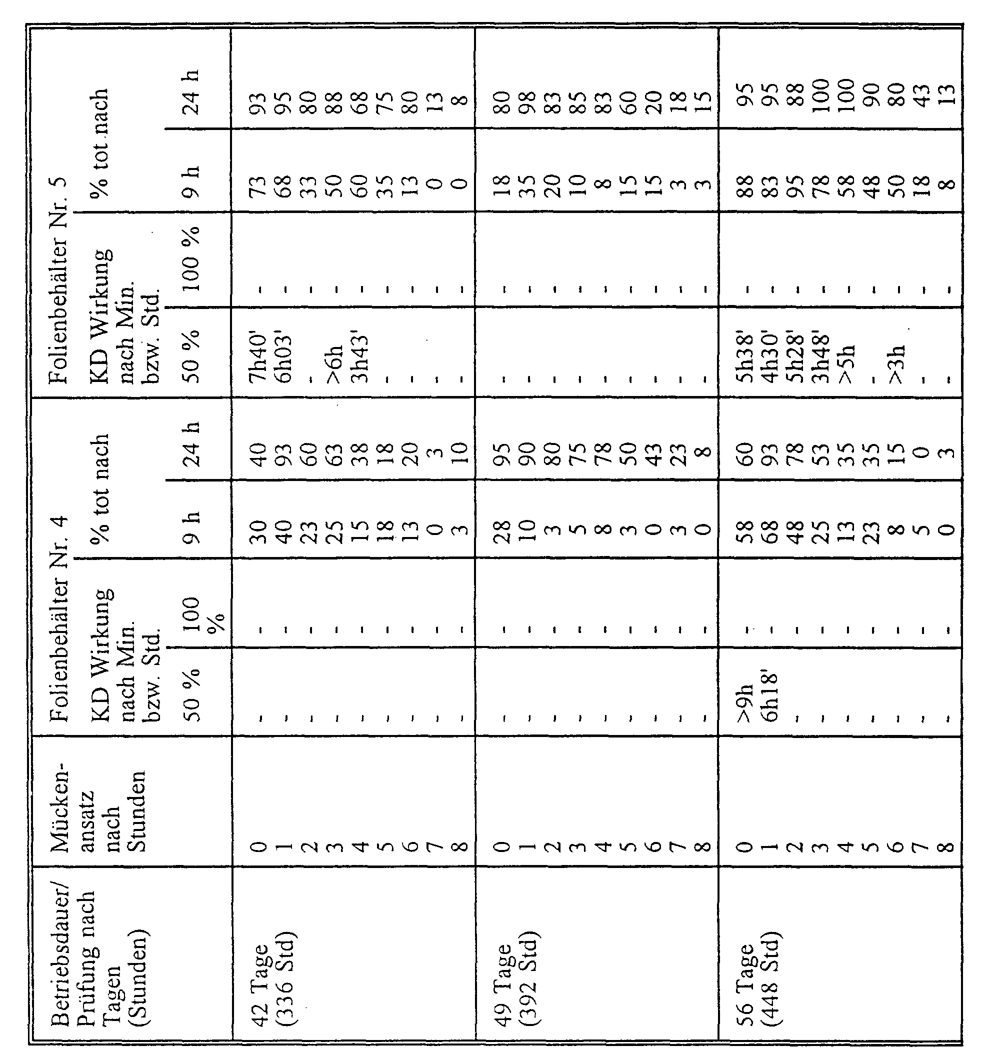

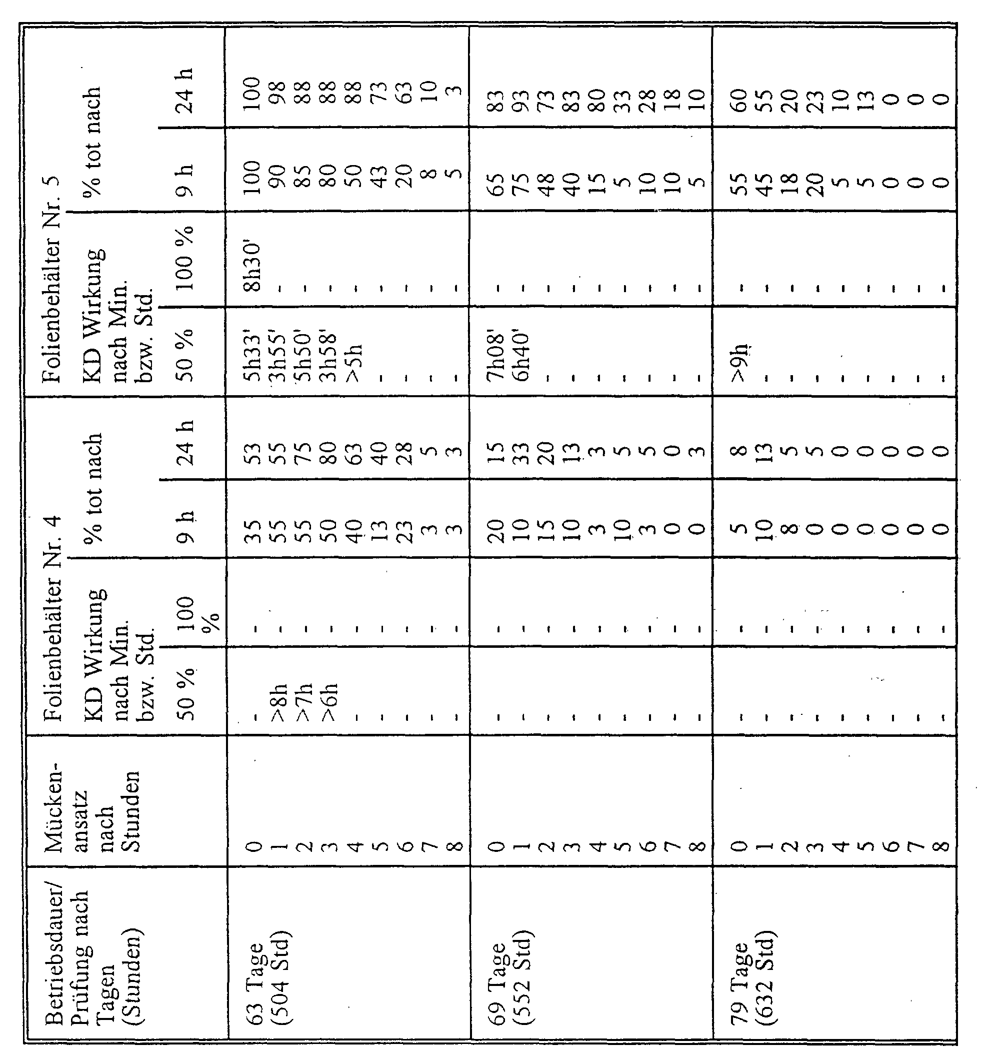

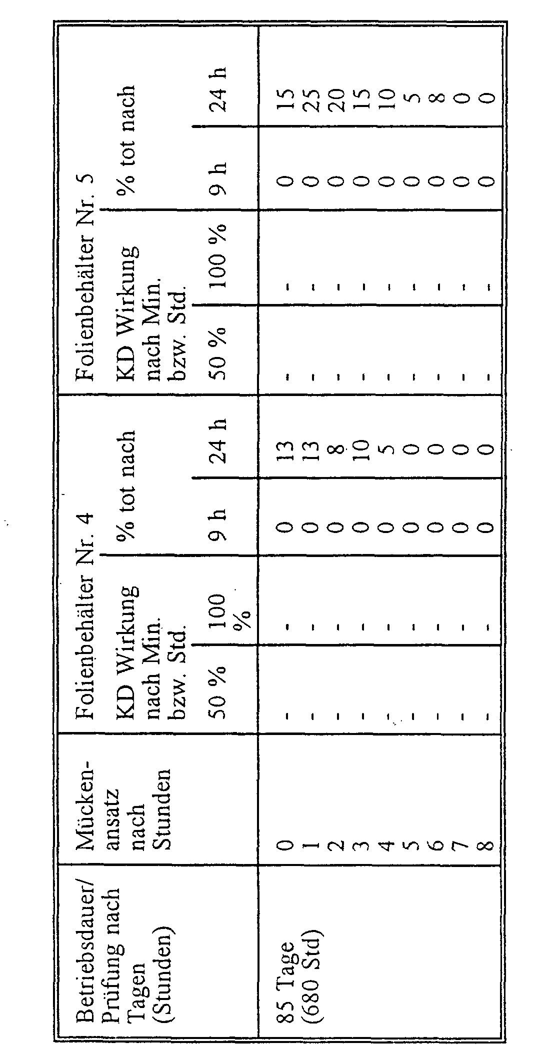

## Patentansprüche

1. Gelformulierungen für Verdampfersysteme zur geregelten und lang anhaltenden Freisetzung eines insektiziden Wirkstoffs, **dadurch gekennzeichnet, daß** die Formulierungen 2,3,5,6-Tetrafluorbenzyl-(+)-1R-trans-2,2-dimetyl-3-(2,2-dichlorviniyl)-cyclopropan-carboxylat (Transfluthrin) und als verdampfungskontrollierenden Stoff (Verdampfungsmodifikator) (i) Diphyl THT® oder Therm S900® oder (ii) ortho-, meta- und/oder para-Terphenyl in Kombination mit einem als Gebildner geeigneten anorganischen Feststoff enthalten.

2. Gelformulierungen gemäß Anspruch 1, **dadurch gekennzeichnet, daß** die Formulierungen zwischen 0,1 und 95 Gew.-% Insektizid-Wirkstoff und 1 - 90 Gew.-% Verdampfungsmodifikator enthalten.

3. Gelformulierungen gemäß Anspruch 1, **dadurch gekennzeichnet, daß** als Gelbildner hochdisperse Kieselsäuren eingesetzt werden.

4. Gelformulierungen gemäß Anspruch 1, **dadurch gekennzeichnet, daß** man als Stabilisatoren Antioxidantien verwendet.

5. Gelformulierungen gemäß Anspruch 1, **dadurch gekennzeichnet, daß** sich diese in tiefgezogenen oder gegossenen Behältern aus Kunststoff oder Metall befinden, die oben offen oder mit geeigneten Geweben, Folien aus Kunststoff oder Metall verschlossen sind, die jedoch für flüchtige Komponenten zum Abtöten von Insekten durchlässig sind.

6. Gelformulierungen gemäß Anspruch 1, **dadurch gekennzeichnet, daß** das Verhältnis Wirkstoff/Verdampfungsmodifikator zwischen 9 und 0,5 beträgt.

7. Gelformulierungen gemäß Anspruch 1, **dadurch gekennzeichnet, daß** diese einen Farbstoff zur optischen Endpunkterkennung der biologischen Wirksamkeit enthalten.

8. Verfahren zur Herstellung von Gelformulierungen gemäß Anspruch 1, **dadurch gekennzeichnet, daß** man in einer entsprechenden Mischapparatur zunächst den Wirkstoff mit Verdampfungsmodifikator und Stabilisator sowie gegebenenfalls zusätzliche Lösungsmittel bei Raumtemperatur bis zur klaren Lösung verrührt, anschließend gegebenenfalls zur klaren Lösung Parfümöle und Farbstoffe unter Rühren bis zur vollständigen Homogenität zugibt und schließlich unter Vakuum den Gelbildner zusetzt und intensiv bis zur homogenen Gelbildung rührt.

## Claims

1. Gel formulations for vapour-producing systems for the controlled and sustained release of an insecticidal active compound, **characterized in that** the formulations comprise 2,3,5,6-tetrafluorobenzyl (+)-1R-trans-2,2-dimethyl-3-(2,2-dichlorovinyl)-cyclopropane-carboxylate (transfluthrin) and vaporization-controlling substance (vaporization modifier) (i) Diphyl THT® or Therm S900® or (ii) ortho-, meta- and/or para-terphenyl in combination with an inorganic solid suitable as a gel former.

2. Gel formulations according to Claim 1, **characterized in that** the formulations comprise between 0.1 and 95% by weight of insecticidal active compound and 1-90% by weight vaporization modifier.

3. Gel formulations according to Claim 1, **characterized in that** the gel formers employed are highly-disperse silicas.

4. Gel formulations according to Claim 1, **characterized in that** antioxidants are used as stabilizers.

5. Gel formulations according to Claim 1, **characterized in that** the said formulations are located in thermoformed, deep-drawn or cast containers made of polymer or metal, these containers being open at the top or closed by means of suitable fabrics, or films made of polymer or metal, but which are permeable to volatile components for destroying insects.

6. Gel formulations according to Claim 1, **characterized in that** the ratio of active compound/vaporization modifier is between 9 and 0.5.

7. Gel formulations according to Claim 1, **characterized in that** said formulations contain a colorant for visually detecting the end of the biological activity.

8. Process for the preparation of gel formulations according to Claim 1, **characterized in that**, in a suitable mixing apparatus, the active compound is first stirred at room temperature with vaporization modifier and stabilizer and, if appropriate, additional solvents until a clear solution is formed, if appropriate, perfume oils and colorants are subsequently added to the stirred clear solution until the mixture is fully homogenized, and finally the gel former is added in vacuo and the mixture is stirred vigorously until a homogenous gel is formed.

## Revendications

1. Formulations sous forme de gel destinées à des systèmes évaporateurs pour la libération réglée et prolongée d'une substance active insecticide, **caractérisées en ce qu'**elles contiennent du (+)-1R-trans-2,2-diméthyl-3-(2,2-dichlorovinyl)-cyclopropane-carboxylate de 2,3,5,6-tétrafluorobenzyle (transfluthrine) et comme substance contrôlant l'évaporation (modificateur d'évaporation) (i) du Diphyl THT® ou du Therm S900® ou (ii) de l'ortho-, du méta- et/ou du para-terphényle en association avec une substance inorganique solide convenant comme gélifiant.

2. Formulations sous forme de gel suivant la revendication 1, **caractérisées en ce qu'**elles contiennent entre 0,1 et 95 % en poids de substance active insecticide et 1 à 90 % en poids de modificateur d'évaporation.

3. Formulations sous forme de gel suivant la revendication 1, **caractérisées en ce que** des silices hautement dispersées sont utilisées comme gélifiants.

4. Formulations sous forme de gel suivant la revendication 1, **caractérisées en ce qu'**on utilise des anti-oxydants comme stabilisants.

5. Formulations sous forme de gel suivant la revendication 1, **caractérisées en ce qu'**elles se trouvent dans des récipients emboutis ou moulés en matière plastique ou en métal dont la partie supérieure est ouverte ou bien fermée avec des tissus ou des feuilles de matière plastique ou de métal appropriés, qui sont toutefois perméables aux composants volatils pour la destruction d'insectes.

6. Formulations sous forme de gel suivant la revendication 1, **caractérisées en ce que** le rapport substance active/modificateur d'évaporation s'élève entre 9 et 0,5.

7. Formulations sous forme de gel suivant la revendication 1, **caractérisées en ce qu'**elles contiennent un colorant permettant l'appréciation visuelle du point terminal de l'activité biologique.

8. Procédé de production de formulations sous forme de gel suivant la revendication 1, **caractérisé en ce qu'**on agite tout d'abord ensemble dans un mélangeur adéquat, à la température ambiante jusqu'à l'obtention d'une solution claire, la substance active avec le modificateur d'évaporation et l'agent stabilisant, ainsi que des solvants éventuellement ajoutés, puis on ajoute, le cas échéant à la solution claire, des essences parfumées et des colorants sous agitation jusqu'à homogénéité complète et finalement on ajoute l'agent gélifiant sous vide et on agite énergiquement jusqu'à formation d'un gel homogène.
